(19) Europäisches Patentamt
European Patent Office
Office européen des brevets

(11) **EP 1 747 100 B1**

(12) **EUROPÄISCHE PATENTSCHRIFT**

(45) Veröffentlichungstag und Bekanntmachung des Hinweises auf die Patenterteilung:
**16.03.2011 Patentblatt 2011/11**

(21) Anmeldenummer: **05735248.6**

(22) Anmeldetag: **31.03.2005**

(51) Int Cl.:
**B42D 15/10** *(2006.01)*

(86) Internationale Anmeldenummer:
**PCT/EP2005/003405**

(87) Internationale Veröffentlichungsnummer:
**WO 2005/095119 (13.10.2005 Gazette 2005/41)**

(54) **SICHERHEITSELEMENT IN FORM EINES MEHRSCHICHTIGEN FOLIENKÖRPERS**

SECURITY ELEMENT PROVIDED IN THE FORM OF A MULTILAYERED FILM BODY

ELEMENT DE SECURITE SE PRESENTANT SOUS LA FORME D'UN CORPS EN PELLICULE MULTICOUCHE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **03.04.2004 DE 102004016596**

(43) Veröffentlichungstag der Anmeldung:
**31.01.2007 Patentblatt 2007/05**

(73) Patentinhaber: **OVD Kinegram AG**
**6301 Zug (CH)**

(72) Erfinder:
• **TOMPKIN, Wayne, Robert**
**CH-5400 Baden (CH)**

• **SCHILLING, Andreas**
**CH-6332 Hagendorn (CH)**

(74) Vertreter: **Zinsinger, Norbert**
**Louis Pöhlau Lohrentz,**
**P.O. Box 30 55**
**90014 Nürnberg (DE)**

(56) Entgegenhaltungen:
**EP-A- 0 657 297        EP-A- 1 189 079**
**WO-A-03/033274        WO-A-03/095228**
**US-A- 5 087 507        US-A1- 2003 058 491**
**US-A1- 2003 104 206**

**EP 1 747 100 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Sicherheitselement in Form eines mehrschichtigen Folienkörpers, der eine Replizierlackschicht und einen Dünnfilmschicht-Interferenzschicht-Aufbau zum Erzeugen eines blickwinkelabhängigen Farbverschiebungseffekts mittels Interferenz aufweist und bei dem in die Grenzfläche zwischen der Replizierlackschicht und dem Dünnfilmschicht-Interferenzschicht-Aufbau eine Reliefstruktur abgeformt ist. Die Erfindung betrifft weiter ein Sicherheitsdokument mit solch einem Sicherheitselement sowie ein Verfahren zur Herstellung eines solchen Sicherheitselements.

Optisch variable Sicherheitselemente werden häufig dazu verwendet, um das Kopieren und den Missbrauch von Dokumenten oder Produkten zu erschweren und wenn möglich zu verhindern. So finden optisch variable Sicherheitselemente häufig Verwendung zur Sicherung von Dokumenten, von Banknoten, von Kreditkarten, von Geldkarten und dergleichen. Hierbei ist es bekannt, ein optisch variables Element mit einem Dünnfilmschicht-Interferenzschicht-Aufbau auszustatten, der blickwinkelabhängige Farbverschiebungseffekte mittels Interferenz erzeugt.

Beispielsweise wird in WO 01/03945 A1 ein Sicherheitsprodukt beschrieben, das ein durchsichtiges Substrat aufweist, auf dessen einen Seite ein Dünnfilmschicht-Interferenzschicht-Aufbau aufgetragen ist, der eine wahrnehmbare Farbverschiebung abhängig von dem Blickwinkel des Betrachters erzeugt. Der Dünnfilmschicht-Interferenzschicht-Aufbau besteht hierbei aus einer Absorptionsschicht, die auf dem durchsichtigen Substrat aufgebracht ist, und aus einer Dielektrizitätsschicht, die auf der Absorptionsschicht aufgebracht ist. Die Absorptionsschicht enthält ein Material, das aus einem der folgenden Materialien oder aus einer Kombination dieser Materialien aufgebaut ist: Chrom, Nickel, Palladium, Titan, Kobalt, Eisen, Wolfram, Molybdän, Eisenoxid oder Kohlenstoff. Die Dielektrizitätsschicht besteht aus einem der folgenden Materialien oder einer Kombination der folgenden Materialien: Siliziumoxid, Aluminiumoxid, Magnesiumfluorid, Aluminiumfluorid, Bariumfluorid, Calciumfluorid oder Lithiumfluorid.

Zur weiteren Erhöhung der Kopiersicherheit ist auf der gegenüberliegenden Seite des transparenten Substrates ein Diffraktionsmuster aufgebracht. Dieses Diffraktionsmuster wirkt als Beugungsgitter, so dass sich mittels dieses zweidimensionalen Musters beispielsweise die Illusion eines dreidimensionalen Bildes für den Betrachter erzeugen lässt.

Weiter wird vorgeschlagen, das diffraktive Muster auf der Seite des transparenten Substrates aufzuprägen, auf der auch der Dünnfilmschicht -Interferenzschicht-Aufbau aufgebracht wird.

Durch diese beiden Ausführungsformen eines optisch variablen Sicherheitselements wird erreicht, dass sich an jeder Stelle des optisch variablen Elements die durch den Dünnfilmschicht-Interferenzschicht-Aufbau erzeugten optischen Effekte und die durch das diffraktive Muster erzeugten optischen Effekte überlagern und sich damit insgesamt ein aus diesen beiden Effekten zusammengesetzter optischer Effekt ergibt, also beispielsweise die Überlagerung eines Farbverschiebungseffekts und eines Hologramms.

Weiter wird in WO 02/00445 A1 ein aus mehreren übereinander angeordneten Schichten bestehendes optisch variables Sicherheitselement beschrieben, das einen Dünnfilmschicht-Interferenzschicht-Aufbau aufweist, der den bereits oben beschriebenen optischen Effekt eines blickwinkelabhängigen Farbwechsels erzeugt. Das optisch variable Sicherheitselement weist weiter eine Replizierschicht auf, in die eine Reliefstruktur eingeprägt ist. Diese Reliefstruktur erzeugt einen weiteren optischen Effekt, nämlich den bereits oben beschriebenen Beugungseffekt, mittels dem sich Hologramme und dergleichen darstellen lassen. Fertigungstechnisch wird hierbei zuerst die Dünnfilmschicht auf die Replizierschicht aufgebracht und sodann die Reliefstruktur aufgeprägt.

Zur Entkopplung der durch den Dünnfilmschicht-Interferenzschicht-Aufbau und die Reliefstruktur erzeugten optischen Effekte werden hierbei zwei Vorgehensweisen vorgeschlagen: Zum einen wird vorgeschlagen, eine opake Schicht zwischen der Reliefstruktur, die mittels Beugung ein holographisches Bild erzeugt, und dem Dünnfilmschicht-Interferenzschicht-Aufbau, der einen Farbwechsel erzeugt, aufzubringen. Mittels dieser opaken Schicht wird die Reliefstruktur von der Dünnfilmstruktur abgeschirmt. Die zweite Möglichkeit besteht darin, zwei oder mehr Schichten eines im wesentlichen transparenten Materials zwischen die ein holographisches Bild durch Beugung erzeugende Reliefstruktur und dem Dünnfilmschicht-Interferenzschicht-Aufbau anzuordnen. Diese Schichten können ein oder mehrere hoch brechende Schichten und eine Klebeschicht umfassen. Mittels dieser Schichten wird die Reflexion und somit die Lichtstärke im Bereich der ein holographisches Bild erzeugenden Reliefstruktur erhöht und das holographische Bild tritt damit gegenüber dem Farbverschiebungeffekt des Dünnfilmschicht-Interferenzschicht-Aufbau hervor.

Die EP 0 657 297 A1 beschreibt ein Sicherheitsdokument mit wenigstens einer Schicht, einem transparenten oder transluzenten Träger und mindestens einem Bild oder Muster zu Identifizierungszwecken. Das Sicherheitsdokument weist Interferenzpigmente auf, die musterförmig angeordnet sein können.

Die WO 03/033274 A1 beschreibt ein Sicherheitselement in Form eines Schichtverbunds mit wenigstens einer transparenten Schutzschicht, einer transparenten Lackschicht, einer Reflexionsschicht und einer Kleberschicht. Die Lackschicht ist musterförmig mit Reliefstrukturen versehen, die ein hohes Tiefen zu Breiten Verhältnis aufweisen und das einfallende Licht absorbieren.

Die EP 1 189 079 A1 offenbart einen laminierten Verbund mit einer reflektierenden optischen Schicht und einer, ein latentes Bild erzeugenden Schicht enthaltend Flüssigkristall-Polymermaterial. Das latente Bild ist visuell nur erkennbar, wenn es durch einen Polarisator betrachtet wird.

Der Erfindung liegt nun die Aufgabe zugrunde, die Herstellung eines optisch variablen Sicherheitselements, das einen Dünnfilmschicht-Interferenzschicht-Aufbau zur Erzeugung eines blickwinkelabhängigen Farbverschiebungseffekts mittels Interferenz aufweist, zu verbessern und ein verbessertes optisches Sicherheitselement mit einem derartigen Dünnfilmschicht-Interferenzschicht-Aufbau anzugeben.

Die Aufgabe der Erfindung wird von einem Sicherheitselement in Form eines mehrschichtigen Folienkörpers gemäß Anspruch 1 gelöst.

Die Erfindung wird weiter von einem Verfahren zur Herstellung eines Sicherheitselements in Form eines mehrschichtigen Folienkörpers gemäß Anspruch 31 gelöst.

Besonders bevorzugt ist hierbei ein Verfahren, bei dem die erste Reliefstruktur in dem ersten Bereich des Sicherheitselements derart ausgeformt wird, dass die Dicke $t_0$ des Dünnfilmschicht-Interferenzschicht-Aufbaus im Bereich der ersten Reliefstruktur derart reduziert ist, dass der durch den Dünnfilmschicht-Interferenzschicht-Aufbau erzeugte erste Farbverschiebungseffekt verändert wird, so dass in dem ersten Bereich des Sicherheitselements, in dem die erste Reliefstruktur abgeformt ist, von dem Dünnfilmschicht-Interferenzschicht-Aufbau reduzierter Dicke ein zweiter Farbverschiebungseffekt erzeugt wird.

Dünnfilmschicht-Interferenzschicht-Aufbauten zeichnen sich prinzipiell durch einen Interferenzschicht-Aufbau (Erfüllen der λ/2 oder λ/4 Bedingung) aus, der blickwinkelabhängige Farbverschiebungen erzeugt. Der Dünnfilmschicht-Interferenzschicht-Aufbau kann hierbei als reflektives Element oder als transmissives Element aufgebaut sein. Ein Dünnfilmschicht-Interferenzschicht-Aufbau kann hierbei prinzipiell aus einer einzigen Schicht mit einem sehr hohen Brechungsindex λ/2 oder λ/4 Schicht), drei oder mehr Dielektrizitäts-Schichten mit abwechselndem hohen und niedrigen Brechungsindex oder zwei oder mehr sich abwechselnden metallischen und dielektrischen Schichten bestehen. Der Dünnfilmschicht-Interferenzschicht-Aufbau weist so beispielsweise eine metallische Absorptionsschicht (vorzugsweise mit 30 % bis 65 % Transmission), eine transparente Distanzschicht als farbwechselerzeugende Schicht (λ/2 oder λ/4 Schicht), eine Metallschicht als reflektierende Schicht (reflektives Element) oder eine optische Trennschicht (transmissives Element) auf.

Genaugenommen geht die λ/2 oder λ/4 Bedingung hierbei davon aus, dass λ die Wellenlänge im Dünnfilm ist, so dass auch der Brechungsindex des Dünnfilms für die Erfüllung dieser Bedingung beachtlich ist. Im Fall der Reflexion (λ/4 Bedingung) ergibt sich für senkrecht einfallendes Licht eine konstruktive Interferenz des Lichts an einer Dünnfilmschicht, wenn die Dicke der Dünnfilmschicht ¼, ¾, ... der Wellenlänge λ des Lichts in dem Dünnfilm ist, allgemein wenn

$$t = \frac{\left(m + \frac{1}{2}\right)\lambda_0}{2n} = \frac{\left(m + \frac{1}{2}\right)\lambda}{2} \quad m = 0,1,2...$$

ist. Hierbei ist $\lambda_0$ die Wellenlänge in der Luft und λ die Wellenlänge in dem Dünnfilm, der einen Brechungsindex n besitzt.

Im Weiteren ist es hierbei auch möglich, dass der Brechungsindex eines Dünnfilms nicht konstant sondern auch komplexer sein kann (z. B. wellenlängenabhängig) und Zwischenschichten entsprechende Eigenfarben haben können, die sich blickwinkelabhängig nicht ändern und die den durch die Interferenz generierten Farbverschiebungseffekt überlagern können.

Für eine nicht senkrecht zur Ebene des Dünnfilms erfolgenden Lichteinfall gilt

$$t = \frac{\lambda_0}{2n\cos\theta}$$

wobei θ der Einfallswinkel des Lichtes ist. Bei entsprechender Wahl der Dicke des Dünnfilms ergibt sich so der bereits oben erwähnte blickwinkelabhängiger Farbverschiebungseffekt.

Der Erfindung liegt hierbei der Gedanke zugrunde, mittels der Abformung einer geeigneten Reliefstruktur in die Grenzschicht zwischen einer Replizierlackschicht und dem Dünnfilmschicht-Interferenzschicht-Aufbau die Erzeugung des Farbverschiebungseffekts durch den Dünnfilmschicht-Interferenzschicht-Aufbau im Bereich dieser Reliefstruktur zu unterdrücken und damit eine sehr kostengünstige, umweltfreundliche und präzise Möglichkeit der musterförmigen Strukturierung des Farbverschiebungseffekts zu schaffen.

Durch die Erfindung wird zum einen die Herstellung von Sicherheitselementen verbilligt, bei denen der von der Dünnfilmschicht erzeugte Farbverschiebungseffekt nicht vollflächig, sondern lediglich in einem Musterbereich oder in einem Hintergrundbereich vorgesehen sein soll. Durch die Erfindung werden bei der Herstellung derartiger Sicherheitselemente kostenintensive und umweltschädliche Prozess-Schritte eingespart. So entfallen beispielsweise die für die partielle Ausformung des Dünnfilmschicht-Interferenzschicht-Aufbaus notwendigen Druck-, Ätz- und Strip-Prozesse.

Weiter hat sich gezeigt, dass mittels der Erfindung sehr hohe Auflösungen erzielbar sind und damit Musterbereiche mit sehr feinen Konturen umgesetzt werden können. Mittels des erfindungsgemässen Verfahrens sind Auflösungen erzielbar, die um den Faktor 1000 besser als durch sonstige Verfahren erzielbare Auflösungen sind (z. B. bei einer Breite der Strukturelemente der ersten Reliefstruktur, die im Bereich der Wellenlänge aber auch unterhalb der Wellenlänge des sichtbaren Lichtes liegt). Damit werden auch in dieser Hinsicht grosse Vorteile gegenüber den bisher verwendeten Verfahren erzielt und es ist mit der Erfindung möglich, Sicherheitselemente mit höherer Kopier- und Fälschungssicherheit herzustellen.

Vorteilhafte Ausgestaltungen der Erfindung sind in den Unteransprüchen bezeichnet.

Es hat sich gezeigt dass Reliefstrukturen, die die Erzeugung eines Farbverschiebungseffekts durch den Dünnfilmschicht-Interferenzschicht-Aufbau unterdrücken, sich durch ein hohes Tiefen zu Breiten Verhältnis der einzelnen Strukturelemente der Reliefstruktur auszeichnen.

Derartige Reliefstrukturen besitzen eine wesentlich höhere effektive Oberfläche als übliche, für die Erzeugung von optischen Effekten in Sicherheitselementen abgeformte Reliefstrukturen. Hierdurch wird - gemäß eines vereinfachten Erklärungsmodells- die effektive Dicke des Dünnfilmschicht-Inferferenzschicht-Aufbaus und damit auch die effektive Dicke der den Farbwechsel erzeugenden Distanzschicht des Dünnfilmschicht-Interferenzschicht-Aufbaus erheblich reduziert, so dass die Distanzschicht durch die Reliefstruktur bedingt die $\lambda/2$ oder $\lambda/4$ Bedingung nicht mehr erfüllt. Es tritt so im Bereich dieser Reliefstruktur ein anderer Farbverschiebungseffekt - oder bei entsprechend hoher Reduzierung der effektiven Dicke der Distanzschicht - kein Farbverschiebungseffekt, d. h. kein für den Betrachter sichtbarer Farbverschiebungseffekt mehr auf. Der Betrachter nimmt in dem Bereich der Reliefstruktur einen anderen bzw. keinen blickwinkelabhängigen Farbverschiebungseffekt mehr wahr. Der von dem Dünnfilmschicht-Interferenzschicht-Aufbau erzeugte erste Farbverschiebungseffekt wird so aufgrund der Reduzierung der effektiven Dicke der den Farbwechsel erzeugenden Distanzschicht durch die Reliefstruktur von der Reliefstruktur unterdrückt.

Wesentlich für das Auftreten dieses Effekts ist ein hohes mittleres Tiefen zu Breiten Verhältnis der einzelnen Strukturelemente der Reliefstruktur, das größer als 0,5 liegen sollte, sowie eine entsprechend kleine Beabstandung der Strukturelemente, die kleiner als 200 $\mu$m, bevorzugt kleiner als 10 $\mu$m (diffraktive Reliefstruktur) sein sollte. Die konkrete Wahl des Tiefen zu Breiten Verhältnisses ist hierbei von der konkreten Reliefstruktur und dem Dünnfilmschicht-Interferenzschicht-Aufbau, im wesentlichen von der Dicke der den Farbwechsel erzeugenden Distanzschicht(en), abhängig und kann experimentell oder analytisch bestimmt werden, wie weiter unten an mehreren Ausführungsbeispielen gezeigt ist.

Untersuchungen haben gezeigt, dass ab einem Tiefen zu Breiten Verhältnis von 1 eine recht hohe Verringerung der effektiven Schichtdicke auftritt und diffraktive Reliefstrukturen mit einem Tiefen zu Breitenverhältnis im Bereich von 1 bis 10 besonders gut geeignet sind, um sicherzustellen, dass kein Farbverschiebungseffekt mehr im Bereich der ersten Reliefstruktur erzeugt wird.

Diese Reliefstrukturen können - wie bereits oben ausgeführt - nicht nur dazu verwendet werden zu erreichen, dass im Bereich der Reliefstruktur kein Farbschiebungseffekt mehr von der Dünnfilmschicht erzeugt wird, sondern auch dazu verwendet werden, dass im Bereich der Reliefstruktur ein anderer Farbschiebungseffekt erzeugt wird, als der, der durch die Strukturparameter der Reliefstruktur (Dicke der Distanzschicht) vorgegeben ist. Auch so lässt sich erreichen, dass sich der optische Eindruck in dem ersten Bereich von dem optischen Eindruck im zweiten Bereich, indem diese Reliefstruktur nicht vorgesehen ist, deutlich unterscheidet. So zeigt sich beispielsweise im ersten Bereich ein blickwinkelabhängiger Farbverschiebungseffekt von Grün nach Blau und im zweiten Bereich ein blickwinkelabhängiger Farbverschiebungseffekt von Rot nach Grün.

Dieser Effekt kann hierbei auch dazu ausgenutzt werden, um durch geeignete Strukturierung eine Art Echt-Farben-Bild zu erzeugen, indem lokal das Aspektverhältnis (Tiefen zu Breiten Verhältnis der Strukturelemente) variiert wird, so dass lokal für jeden Bildpunkt des Echt-Farben-Bildes die Farbe durch die Wahl des Aspektverhältnisses eingestellt wird. So ist es beispielsweise möglich die Tiefe der Reliefstruktur bei konstanter Gitterfrequenz gemäß der für den jeweiligen Bildpunkt vorzusehenden Farbe zu variieren.

Gemäss eines bevorzugten Ausführungsbeispiels der Erfindung bildet der erste oder der zweite Bereich einen in Form eines Logos, eines Textes oder eines Bildes ausgebildeten Musterbereich und der jeweilige andere der beiden Bereiche einen Hintergrundbereich, so dass der Musterbereich durch die unterschiedliche Wirkung der ersten und zweiten Bereiche klar hervortritt. Im zweiten Bereich ist hierbei bevorzugt eine zweite Reliefstruktur in die Grenzfläche abgeformt, so dass sich im zweiten Bereich der von der zweiten Reliefstruktur generierte optische Effekt mit dem von dem Dünnfilmschicht-Interferenzschicht-Aufbau generierten optischen Effekt überlagert.

Es ist weiter möglich, dass sich beispielsweise ein feines Linienmuster, beispielsweise eine Guilloche, über die ersten und zweiten Bereiche erstreckt. Der besondere Vorteil der Verwendung der vorliegenden Erfindung liegt hierbei darin, dass dieses feine Linienmuster besonders filigran sein kann und es sich im Register mit allen diffraktiven Sicherheitsmerkmalen befinden kann. Beispielsweise hat der Musterbereich eine V-förmige Form, wobei der Hintergrundsbereich einen Farbwechseleffekt zeigt und der V-förmige Bereich keinen solchen Farbwechseleffekt zeigt. Weiter erstreckt sich eine Guilloche über Musterbereich und Hintergrundbereich. Im V-förmigen Musterbereich ist eine Reliefstruktur mit einem hohen Tiefen zu Breiten Verhältnis abgeformt. Eine Reliefstruktur mit einem niedrigen Tiefen zu Breiten Verhältnis, bevorzugt mit einem Tiefen zu Breiten Verhältnis von kleiner als 0,2, wird dazu verwendet, um die Linien der Guilloche, die sich sowohl über das Muster als auch über den Hintergrundbereich erstrecken, zu bilden.

Die zweite Reliefstruktur wird hier bevorzugt von einer beugungsoptisch wirksamen Struktur, beispielsweise einem Hologramm oder einem KINEGRAM® gebildet. Es ist jedoch auch möglich, als Reliefstruktur eine Makrostruktur oder eine Mattstruktur zu verwenden, die entsprechende optisch variable Effekte generieren.

Durch den Einsatz der Erfindung ist es hier möglich, Bereiche, in denen durch den Dünnfilmschicht-Interferenzschicht-Aufbau ein blickwinkelabhängiger erster Farbverschiebungseffekt generiert wird, und Bereiche, in denen von einer vorzugsweise diffraktiven Struktur ein weiterer optisch variabler Effekt erzeugt wird, im Register übereinander anzuordnen und dadurch ein Sicherheitsmerkmal zu generieren, in dem sich die beiden oben geschilderten optischen Effekte passergenau überlagern. Ein derartiges Sicherheitsmerkmal kann durch das Aufbringen eines partiellen Dünnfilmschicht-Interferenzschicht-Aufbaus auf einer mit einer diffraktiven Struktur versehenen Replizierschicht nur sehr schwer nachgeahmt werden, da ein auf die diffraktive Struktur abgestelltes registerhaltiges Aufbringen oder Entfernen eines Dünnfilmschicht-Interferenzschicht-Aufbaus sehr hohe technologische Anforderungen stellt.

Gemäß eines weiteren bevorzugten Ausführungsbeispieles der Erfindung kann für den Betrachter ein kontinuierlicher Verlauf von einem Bereich, in dem ein starker Farbverschiebungseffekt für den Betrachter sichtbar ist, zu einem Bereich, in dem kein Farbverschiebungseffekt mehr für den Betrachter sichtbar ist, erzeugt werden. Hierzu wird nach Art eines Grautonbildes die Stärke des lokalen Farbverschiebungseffektes durch einen lokalen "Grauwert" bestimmt. Der lokale "Grauwert" bestimmt sich hierbei durch den lokalen Flächenteilanteil der ersten Reliefstruktur. Aufgrund der mittels der Erfindung erzielbaren hohen Auflösungen lassen sich so mittels der Erfindung "Farbshift-Bilder" generieren. Die Generierung derartiger "Farbshift-Bilder" mittels eines partiellen Auftrags des Dünnfilmschicht-Interferenzschicht-Aufbaus ist im Gegensatz hierzu nur sehr schwer und mit sehr hohem technologischen Aufwand erreichbar.

Die "Graustufe" eines "Farbshift-Bildes" wird hierbei bevorzugt durch das Verhältnis von ersten Rasterbereichen, in denen die erste Reliefstruktur abgeformt ist, und zweiten Rasterbereichen, in denen die erste Reliefstruktur nicht abgeformt ist, bestimmt. Die Abmessung der einzelnen Rasterbereiche beträgt hierbei bevorzugt weniger als 300 $\mu$m, bevorzugt etwa 50 $\mu$m.

Es ist hierbei möglich, den Dünnfilmschicht-Interferenzschicht-Aufbau transmissiv oder reflektiv auszugestalten und aus mehreren dielektrischen Schichten, mehreren dielektrischen und metallischen Schichten oder einer Perlglanzschicht aufzubauen. Weiter ist es möglich, eine partielle Reflexionsschicht zwischen der Replizierlackschicht und dem Dünnfilmschicht-Interferenzschicht-Aufbau anzuordnen und hierdurch Bereiche zu erzeugen, in denen beispielsweise lediglich ein reflektiver beugungsoptischer Effekt sichtbar ist. Auch ist es möglich, auf einen vollflächig transparenten Dünnfilmschicht-Interferenzschicht-Aufbau eine partielle reflektive Schicht aufzubringen, um damit ein Sicherheitselement mit transmissiven und reflektiven Bereichen bereitzustellen. Durch diese Varianten oder eine Kombination dieser Varianten ist es möglich, komplexe und optisch ansprechende Sicherheitselemente basierend auf dem Grundgedanken der Erfindung zu verwirklichen.

Als Reliefstruktur, die zur Unterdrückung oder Erzeugung eines Farbverschiebungseffekts durch den Dünnfilmschicht-Interferenzschicht-Aufbau eingerichtet ist, wird vorzugsweise eine diffraktive Struktur mit einem hohen Tiefen zu Breiten Verhältnis der einzelnen Strukturelemente der Reliefstruktur eingesetzt. Hierbei hat sich gezeigt, dass sich vor allem bei einem Tiefen zu Breiten Verhältnis von 0,75 bis 5 gute Ergebnisse erzielen lassen. Auch Tiefen zu Breiten Verhältnisse mit einem Faktor 10 sind möglich.

Gemäss eines weiteren bevorzugten Ausführungsbeispiels der Erfindung wird für die Reliefstruktur, die zur Unterdrückung der Erzeugung eines Farbverschiebungseffekts durch den Dünnfilmschicht-Interferenzschicht-Aufbau eingerichtet ist, eine Reliefstruktur verwendet, bei der die Tiefe der Reliefstruktur sowohl in x- als auch in y-Richtung variiert wird, bei der der mittlere Abstand benachbarter Erhebungen der Reliefstruktur kleiner als die mittlere Profiltiefe der Reliefstruktur ist und bei der benachbarte Erhebungen der Reliefstruktur weniger als 200 $\mu$m voneinander entfernt sind und damit unter dem Auflösungsvermögen des menschlichen Auges liegen. Bei derartigen Strukturen kann es sich auch um Strukturen mit einem stochastischen Oberflächenprofil handeln, die die obigen Bedingungen erfüllen. Derartige Strukturen lassen sich besonders gut mittels eines UV-Replizierverfahrens verwirklichen.

Bevorzugt werden als derartige Reliefstrukturen jedoch Reliefstrukturen verwendet, die eine periodische Funktion der Koordinaten x und y sind, bei denen die Tiefe der Reliefstruktur sowohl in x- als auch in y-Richtung periodisch variiert wird und bei denen die Periodenlänge in x- und in y-Richtung kleiner oder gleich der Strukturtiefe der Reliefstruktur sind. Eine vorteilhafte Ausführungsform einer derartigen Reliefstruktur besteht aus einem aus zwei im wesentlichen rechtwinkelig zueinander angeordneten Basisgittern zusammengesetzten Kreuzgitter, bei dem die Periodenlänge der Basisgitter kleiner oder gleich der Strukturtiefe der ersten Reliefstruktur sind.

Besonders gute Ergebnisse lassen sich bei den oben beschriebenen Reliefstrukturen erzielen, wenn der mittlere Abstand benachbarter Erhebungen bzw. mindestens eine der Periodenlängen kürzer als die Grenzwellenlänge des sichtbaren Lichtes ist.

Weiter hat es sich gezeigt, dass sich besonders gute Ergebnisse dann erzielen lassen, wenn die Dünnfilmschicht mittels Sputtern oder Aufdampfen nach Abformung der oben beschriebenen Reliefstrukturen auf die Replizierlackschicht aufgebracht wird. Der Dünnfilmschicht-Interferenzschicht-Aufbau wird hierbei im ersten und im zweiten Bereich in gleicher Weise und damit mit gleicher nomineller Flächendichte aufgebracht.

Ein erfindungsgemässes Sicherheitselement wird vorzugsweise zur Sicherung von Banknoten, Kreditkarten, Geldkarten, Dokumenten oder Waren eingesetzt. Das Sicherheitselement wird hierbei bevorzugt von einem mehrschichtigen Folienkörper gebildet, der eine Transferfolie, insbesondere eine Heissprägefolie, oder eine Laminierfolie bildet.

Im Folgen wird die Erfindung anhand von mehreren Ausführungsbeispielen unter Zuhilfenahme der beiliegenden Zeichnungen beispielhaft verdeutlicht.

| | |
|---|---|
| Fig. 1 | zeigt eine schematische Darstellung eines erfindungsgemässen Sicherheitselements. |
| Fig. 2 | zeigt eine schematische Darstellung eines Sicherheitsdokuments mit einem erfindungsgemässen Sicherheitselement. |
| Fig. 3 | zeigt eine graphische Darstellung der Funktion $\varepsilon = f(h, d)$. |
| Fig. 4 | zeigt eine schematische Schnittdarstellung einer Reliefstruktur mit hohem Tiefen zu Breiten Verhältnis. |
| Fig. 5a bis 5d | zeigen in schematischen Schnittdarstellungen Reliefstrukturen mit unterschiedlichem Tiefen zu Breiten Verhältnis. |
| Fig. 6 | zeigt eine graphische Darstellung der Abhängigkeit des Reflexionsgrades eines Ausführungsbeispiels eines Dünnfilmschicht- Interferenzschicht-Aufbaus von der Wellenlänge des einfallenden Lichtes und der effektiven Dicke. |
| Fig. 7 | zeigt eine graphische Darstellung der Abhängigkeit des Reflexionsgrades des Dünnfilmschicht-Interferenzschicht-Aufbaus in Fig. 6 in Abhängigkeit von der Wellenlänge und dem Einfallswinkel OR- polarisierten Lichtes. |
| Fig. 8a bis Fig. 8c | zeigen jeweils eine bildliche Darstellung einer Draufsicht auf ein erfindungsgemässes Sicherheitselement. |
| Fig. 9 | zeigt eine schematische Darstellung einer Reliefstruktur zur Verwendung in einem erfindungsgemässen Sicherheitselement. |
| Fig. 10 | zeigt eine schematische Darstellung eines erfindungsgemässen Sicherheitselements für ein weiteres Ausführungsbeispiel der Erfindung. |
| Fig. 11a und Fig. 11b | zeigen schematische Darstellungen von Reliefstrukturen, die in dem Sicherheitselement nach Fig. 10 verwendet werden. |

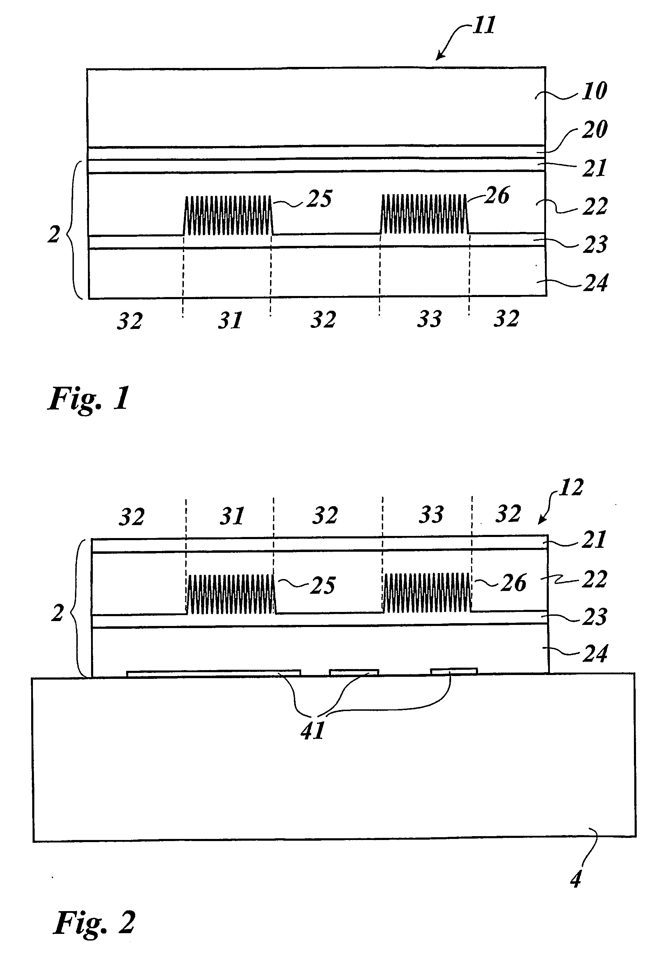

Fig. 1 zeigt ein Sicherheitselement 11 in Form eines mehrschichtigen Folienkörpers, der eine Trägerfolie 10, eine Ablöseschicht 20, eine Schutzlackschicht 21, eine Replizierlackschicht 22, einen Dünnfilmschicht-Interferenzschicht-Aufbau 23 und eine Klebeschicht 24 aufweist.

Bei dem Sicherheitselement 11 handelt es sich um eine Prägefolie, insbesondere um eine Heissprägefolie. Es ist jedoch auch möglich, das Sicherheitselement 11 als Laminierfolie oder Stickerfolie auszugestalten.

Die Trägerschicht 10 besteht beispielsweise aus einer PET- oder BOPP-Folie einer Schichtdicke von 10 μm bis 50 μm, vorzugsweise mit einer Dicke von 19 μm bis 23 μm. Auf die Trägerfolie werden sodann mittels einer Tiefdruck-Rasterwalze die Ablöseschicht 20 und die Schutzlackschicht 21 aufgebracht. Die Ablöse- und Schutzlackschichten 20 und 21 haben hierbei vorzugsweise eine Dicke von 0,2 bis 1,2 μm. Auf diese Schichten könnte auch verzichtet werden.

Sodann wird die Replizierlackschicht 22 aufgebracht.

Die Replizierlackschicht 22 besteht vorzugsweise aus einem strahlenvernetzbaren Replizierlack. Bevorzugt wird ein UV-Replizierverfahren zur Abformung der Reliefstrukturen 25 und 26 in der Replizierlackschicht 22 eingesetzt. Als Replizierlack wird hierbei ein UV-härtbarer Lack verwendet. Das Einbringen der Reliefstrukturen 25 und 26 in die UV-vernetzbare Replizierlackschicht erfolgt hierbei beispielsweise durch UV-Bestrahlung bei der Abformung der Reliefstruktur in die noch weiche oder flüssige Lackschicht oder durch partielle Bestrahlung und Aushärtung der UV-vernetzbaren Lackschicht. Anstelle eines UV-vernetzbaren Lackes kann hierbei auch ein sonstiger strahlenvernetzbarer Lack eingesetzt werden.

Weiter ist es auch möglich, dass die Replizierlackschicht 22 aus einem transparenten, thermoplastischen Kunststoffmaterial besteht. In die Replizierlackschicht 22 wird anschliessend mittels eines Prägewerkzeuges eine oder mehrere Reliefstrukturen, beispielsweise die Reliefstrukturen 25 und 26, eingeprägt.

Die Dicke, die für die Replizierlackschicht 22 zu wählen ist, wird von der für die Reliefstrukturen 25 und 26 gewählten Profiltiefe bestimmt. Es muss sichergestellt sein, dass die Replizierlackschicht 22 über eine ausreichende Dicke verfügt, um ein Abformen der Reliefstrukturen 25 und 26 zu ermöglichen. Vorzugsweise besitzt die Replizierlackschicht 22 hierbei eine Dicke von 0,3 bis 1,2 $\mu$m.

Beispielsweise wird die Replizierlackschicht 22 mittels einer Linienraster-Tiefdruckwalze vollflächig mit einem Auftragegewicht von 2,2 g/m$^2$ vor Trocknung auf die Schutzlackschicht 21 aufgebracht. Als Replizierlack wird hierbei ein Lack folgender Zusammensetzung gewählt:

| Komponente | Gewichtsanteil |
|---|---|
| Hochmolekulares PMMA-Harz | 2000 |
| Silikonalcyd ölfrei | 300 |
| Nichtionisches Netzmittel | 50 |
| Niedrigviskose Nitrocellulose | 12000 |
| Toluol | 2000 |
| Diaceton-Alkohol | 2500 |

Anschliessend wird die Replizierlackschicht 22 in einem Trockenkanal bei einer Temperatur von 100 bis 120 °C getrocknet.

Sodann werden in die Replizierlackschicht 22 die Reliefstrukturen 25 und 26 beispielsweise mittels einer aus Nickel bestehenden Matrize bei etwa 130 °C eingeprägt. Zum Einprägen der Reliefstrukturen 25 und 26 wird die Matrize vorzugsweise elektrisch aufgeheizt. Vor dem Abheben der Matrize von der Replizierlackschicht 22 nach Prägung kann die Matrize hierbei wieder abgekühlt werden. Nach Einprägen der Reliefstrukturen 25 und 26 erhärtet der Replizierlack der Replizierlackschicht 22 durch Vernetzung oder in sonstiger Weise.

Weiter ist es auch möglich, die Reliefstrukturen 25 und 26 durch ein Ablationsverfahren in die Replizierlackschicht 22 einzubringen.

Bei den Reliefstrukturen 25 und 26 handelt es sich hierbei um Reliefstrukturen, die die Erzeugung eines Farbverschiebungseffekts durch den Dünnfilmschicht-Interferenzschicht-Aufbau 23 unterdrücken.

Strukturen, die diese Wirkung zeigen, besitzen ein hohes Tiefen zu Breiten Verhältnis der einzelnen Strukturelemente der Reliefstruktur und damit eine um ein Vielfaches höhere effektive Oberfläche als übliche, für die Erzeugung von optischen Effekten in Sicherheitselementen abgeformte Reliefstrukturen.

Hierdurch wird - gemäß eines vereinfachten Erklärungsmodells- die effektive Dicke des Dünnfilmschicht-Interferenzschicht-Aufbaus und damit auch die effektive Dicke der den Farbwechsel erzeugenden Distanzschicht des DünnfilmschichtInterferenzschicht-Aufbaus erheblich reduziert, so dass ein anderer Farbverschiebungseffekt - oder bei entsprechend hoher Reduzierung der effektiven Dicke der Distanzschicht - kein Farbverschiebungseffekt mehr auftritt, da die Distanzschicht durch die Reliefstruktur bedingt die $\lambda/2$ oder $\lambda/4$ Bedingung nicht mehr erfüllt.. D.h. der Betrachter nimmt in dem Bereich der Reliefstruktur einen anderen bzw. keinen blickwinkelabhängigen Farbverschiebungseffekt mehr wahr. Der von dem Dünnfilmschicht-Interferenzschicht-Aufbau erzeugte erste Farbverschiebungseffekt wird so aufgrund der Reduzierung der effektiven lokalen Dicke der den Farbwechsel erzeugenden Distanzschicht durch die Reliefstruktur von der Reliefstruktur unterdrückt.

Wesentlich für das Auftreten dieses Effekts ist ein hohes mittleres Tiefen zu Breiten Verhältnis der einzelnen Strukturelemente der Reliefstruktur, das größer als 0,5 liegen sollte, sowie eine entsprechend kleine Beabstandung der Strukturelemente, die kleiner als 200$\mu$m, bevorzugt kleiner als 10$\mu$m (diffraktive Reliefstruktur) sein sollte. Die konkrete Wahl des Tiefen zu Breiten Verhältnisses ist hierbei von der konkreten Reliefstruktur und dem Dünnfilmschicht-Interferenzschicht-Aufbau, im wesentlichen von der Dicke der den Farbwechsel erzeugenden Distanzschicht(en), abhängig und kann experimentell oder analytisch bestimmt werden, wie dies die folgenden Beispiele zeigen:

Um das Erzeugen eines Farbverschiebungseffekts durch den DünnfilmschichtInterferenzschicht-Aufbau sicher zu unterdrücken, ist es vorteilhaft, dass es sich bei den Reliefstrukturen 25 und 26 nicht um ein einfaches Gitter handelt, bei der die Tiefe der Reliefstruktur lediglich in einer Richtung periodisch variiert wird, sondern dass die Tiefe der Reliefstruktur in zwei Richtungen, beispielsweise in Richtung zweier unterschiedlicher, die Grenzflächen zwischen der Replizierlackschicht 22 und dem Dünnfilmschicht-Interferenzschicht-Aufbau 23 aufspannender Vektoren variiert wird. Auch dadurch wird die sich ergebende effektive Oberfläche der Reliefstrukturen 25 und 26 erheblich gegenüber üblichen, für die Erzeugung von optischen Effekten verwendeten Reliefstrukturen, erhöht.

Weiter hat es sich gezeigt, dass sich auch mit linearen Gittern eine erhebliche Erhöhung der effektiven Oberfläche der Reliefstruktur und damit gute Ergebnisse erzielen lassen: Die effektive Oberfläche S in einem Bereich R, dessen Strukturtiefe durch die Funktion z = f von (x,y) bestimmt wird, kann durch folgende Gleichung beschrieben werden:

$$S = \iint_R \sqrt{1 + f_x^2 + f_y^2} \ dA$$

Ein Kreuzgitter mit einer Periode d und einer Profiltiefe h kann beispielsweise durch folgende Funktion beschrieben werden:

$$f(x,y) = h \sin^2\left(\frac{\pi x}{d}\right) \sin^2\left(\frac{\pi y}{d}\right)$$

Wenn die Perioden x und y identisch sind, ergeben sich hieraus folgende partiellen Differentialquotienten:

$$f_x = \frac{\partial}{\partial x} h \sin^2\left(\frac{\pi x}{d}\right) \sin^2\left(\frac{\pi y}{d}\right) = \frac{h\pi}{d} \sin\left(\frac{2\pi x}{d}\right) \sin^2\left(\frac{\pi y}{d}\right)$$

$$f_y = \frac{\partial}{\partial y} h \sin^2\left(\frac{\pi x}{d}\right) \sin^2\left(\frac{\pi y}{d}\right) = \frac{h\pi}{d} \sin^2\left(\frac{\pi x}{d}\right) \sin\left(\frac{2\pi y}{d}\right)$$

Die effektive Oberfläche ist damit durch folgende Gleichung bestimmt:

$$S = \iint_R \sqrt{1 + f_x^2 + f_y^2} \ dA$$

$$= \int_0^d \int_0^d \sqrt{1 + \left(\frac{h\pi}{d}\right)^2 \left[\left(\sin\left(\frac{2\pi x}{d}\right) \sin^2\left(\frac{\pi y}{d}\right)\right)^2 + \left(\sin^2\left(\frac{\pi x}{d}\right) \sin\left(\frac{2\pi y}{d}\right)\right)^2\right]} \ dx \, dy$$

Diese Gleichung lässt sich nicht auf einfachem Wege analytisch lösen. Durch numerische Lösung dieser Gleichung wurde jedoch überraschend festgestellt, dass der Faktor ε, der angibt, in welcher Weise sich die effektive Oberfläche abhängig von dem Tiefen zu Breiten Verhältnis ändert, sich signifikant erhöht, wenn das Tiefen zu Breiten Verhältnis h/d > als 1 ist.

Durch die Reliefstruktur wird die Dicke t in Bezug auf die nominale Dicke $t_0$ (Dicke in "flachen" Bereichen) durch das Dickenverhältnis ε bzw. seinen Kehrwert, den Dickenreduktionsfaktor 1/ε, wie folgt beeinflusst:

$$t = \frac{t_0}{\varepsilon}$$

Tabelle 1 gibt sowohl für das Dickenverhältnis ε als auch für den Dickenreduktionsfaktor 1/ε eines Kreuzgitters die Zahlenwerte für das Tiefen zu Breiten Verhältnis 0 < h/d ≤ 5 an.

Z. B. wird bei h = 2d, d.h. wenn die Profiltiefe die zweifache Gitterperiode ist, die effektive Oberfläche durch den Faktor ε = 3,5 vergrößert. Die effektive Dicke t wird damit um den Dickenreduktionsfaktor 1/ε = 1/3,5 auf ca. 28% der nominalen Dicke $t_0$ verringert. Bei einer Reliefstruktur mit einem Tiefen zu Breiten Verhältnis von 2 beträgt die effektive Dicke der Dünnfilmschicht so $t_0/\varepsilon = 0{,}3\ t_0$, d.h. der Dünnfilmschicht-Interferenzschicht-Aufbau hat in diesem Bereich nur ein Drittel der Dicke des Dünnfilmschicht-Interferenzschicht-Aufbaus in einem flachen Bereich.

Tabelle 1

| Tiefen zu Breiten Verhältnis h/d | Dickenfaktor $\varepsilon$ | Dickenreduktionsfaktor $1/\varepsilon$ |
|---|---|---|
| 0 | 1,00 | 1,00 |
| 0,5 | 1,36 | 0,74 |
| 1,0 | 2,02 | 0,50 |
| 1,5 | 2,75 | 0,36 |
| 2,0 | 3,52 | 0,28 |
| 2,5 | 4,30 | 0,23 |
| 3,0 | 5,09 | 0,20 |
| 3,5 | 5,88 | 0,17 |
| 4,0 | 6.68 | 0,15 |
| 4,5 | 7,47 | 0,13 |
| 5,0 | 8,28 | 0,12 |

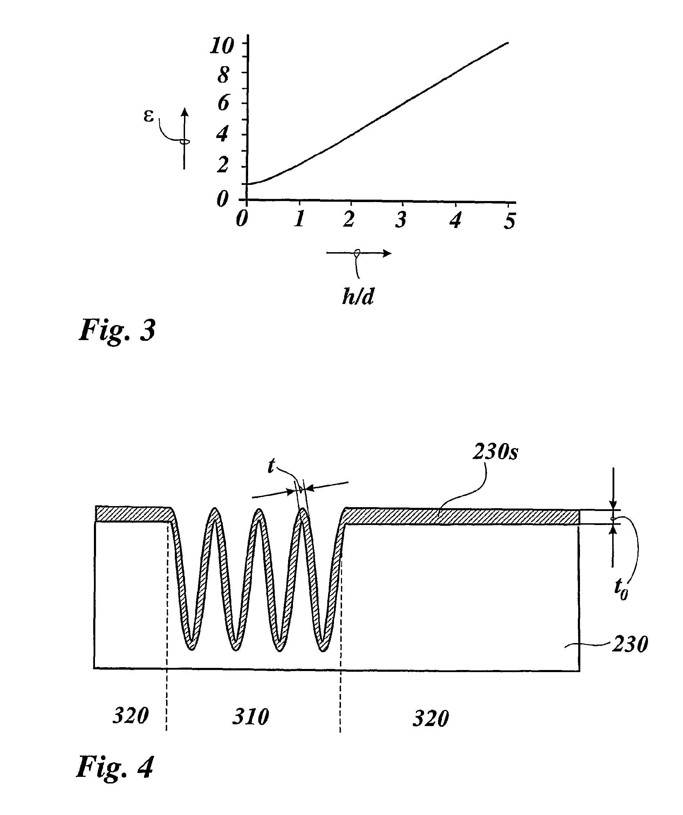

Fig. 3 stellt die Zahlenwerte aus Tabelle 1 in einer graphischen Darstellung dar und zeigt die Abhängigkeit des Dickenverhältnisses $\varepsilon$ von dem Tiefen zu Breiten Verhältnis h/d.

Fig. 4 zeigt nun in einer schematischen Schnittdarstellung eine Schicht 230 mit Bereichen 310 und 320 mit unterschiedlichen Reliefstrukturen, die mit einem Dünnfilmschicht-Interferenzschicht-Aufbau 230s versehen sind. Der Dünnfilmschicht-Interferenzschicht-Aufbau 230 s weist in den flachen Bereichen 320, die mit glatter Oberfläche ausgebildet sind, die nominale Dicke $t_0$ auf und in dem Bereich 310, der mit einem hohen Tiefen zu Breiten Verhältnis ausgebildet ist, die geringere Dicke t auf.

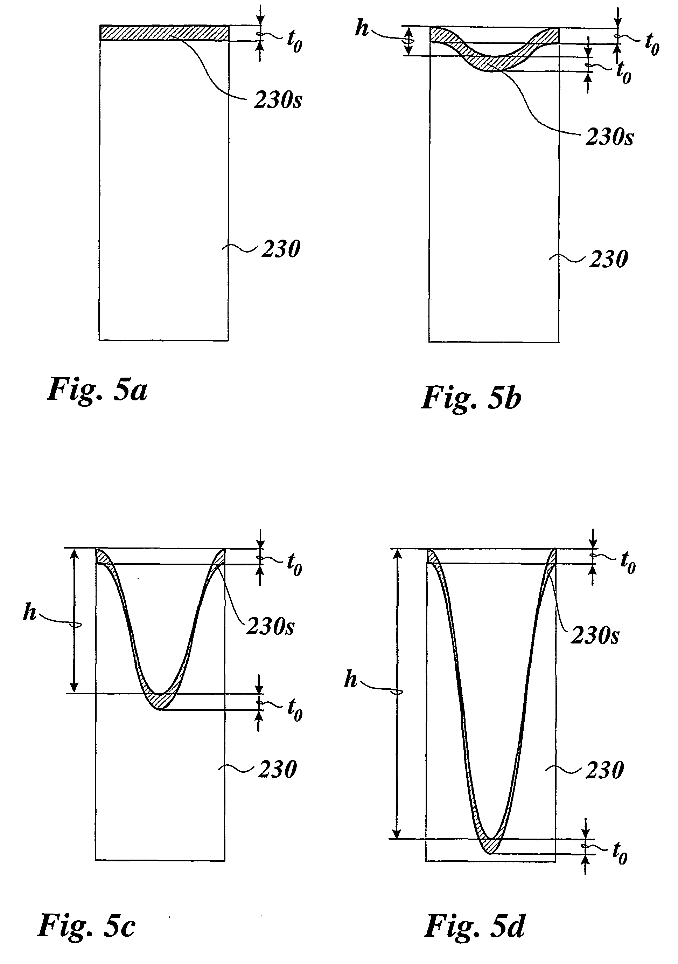

Die Fig. 5a bis 5d zeigen in schematischen Darstellungen die Auswirkung des Tiefen zu Breiten Verhältnisses auf die effektive lokale Dicke t. Die Reliefstruktur der Schicht 230 weist bei wechselnder Tiefe h eine konstante Breite d = 350 nm auf. Der Dünnfilmschicht-Interferenzschicht-Aufbau 230s ist mit der nominalen Dicke $t_0$ = 40 nm ausgebildet.

In Fig. 5a ist die Schicht 230 glatt ausgebildet. Der Dünnfilmschicht-Interferenzschichtaufbau 230s weist deshalb die maximale Dicke auf, nämlich die nominale Dicke $t_0$ = 40 nm.

Fig. 5b zeigt nun die Schicht 230 mit einer Reliefstruktur, deren Tiefe h = 100 nm ist. Das Tiefen zu Breiten Verhältnis ist h/d = 0,29. Es handelt sich hierbei um eine Reliefstruktur mit niedrigem Tiefen zu Breiten Verhältnis. Die auf den Flanken der Reliefstruktur ausgebildete Dicke des Dünnfilmschicht-Interferenzschicht-Aufbaus 230s ist nur geringfügig kleiner als die nominale Dicke $t_0$.

Fig. 5c zeigt die Schicht 230 nun mit einer Reliefstruktur, deren Tiefe h = 400 nm ist, d.h. viermal größer als die Tiefe der in Fig. 5b dargestellten Reliefstruktur. Das Tiefen zu Breiten Verhältnis ist nun h/d = 1,14. Die auf den Flanken der Reliefstruktur ausgebildete Dicke des Dünnfilmschicht-Interferenzschicht-Aufbaus 230s ist nun wesentlich kleiner als die nominale Dicke $t_0$.

Fig. 5d zeigt die Schicht 230 mit einer Reliefstruktur, deren Tiefe h = 800 nm ist. Das Tiefen zu Breiten Verhältnis ist deshalb h/d = 2,3. Die auf den Flanken der Reliefstruktur ausgebildete Dicke des Dünnfilmschicht-Interferenzschicht-Aufbaus 230s ist nochmals gegenüber der Dicke der in Fig. 5c dargestellten Reliefstruktur verringert.

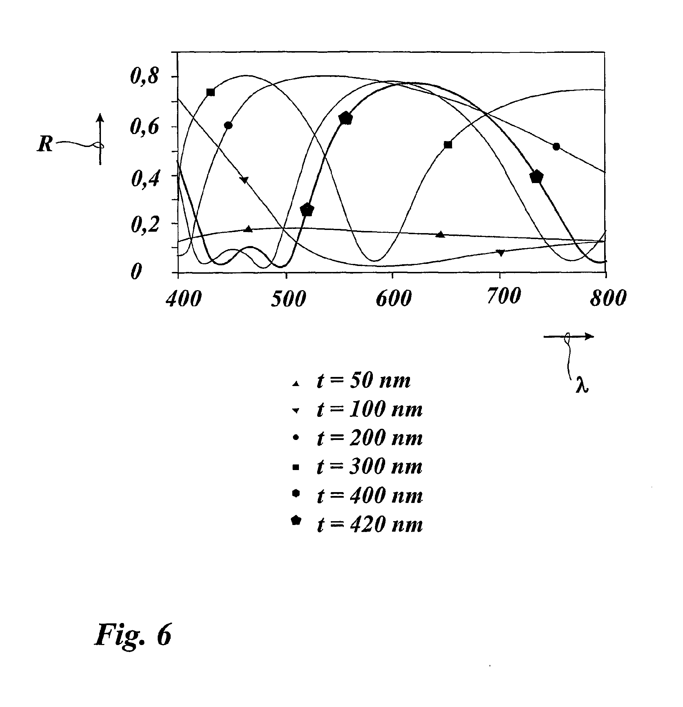

Fig. 6 zeigt nun in einer graphischen Darstellung die rechnerisch mit dem Computerprogramm "Gsolver" ermittelte Abhängigkeit des Reflexionsvermögens eines Dünnfilmschicht-Interferenzschicht-Aufbaus von der Wellenlänge $\lambda$ des einfallenden Lichtes und der effektiven Dicke t.

Der Dünnfilmschicht-Interferenzschicht-Aufbau ist als ein Dünnfilmschichtsystem mit einer $SiO_2$-Schich mit einer Dicke von 275 nm ausgebildet, die zwischen zwei $TiO_2$-Schichten mit jeweils einer Dicke von 70 nm angeordnet ist. Die $SiO_2$-Schicht bildet hierbei die für den Farbwechsel verantwortliche Distanzschicht, die die $\lambda/2$ oder $\lambda/4$ Bedingung zur Erzeugung des Interferenzeffektes erfüllt. Die nominale Dicke $t_0$ des Dünnfilmschicht-Interferenzschicht-Aufbaus beträgt also $t_0$ = (70 + 275 + 70) nm = 415 nm. Der Dünnfilmschicht-Interferenzschicht-Aufbau ist auf einem Kunststoffsubstrat, das eine Brechzahl von 1,5 aufweist, angeordnet und grenzt an Luft.

Das Kunststoffsubstrat weist Reliefstrukturen auf, die unterschiedliche effektive Dicken t des Dünnfilmschicht-Interferenzschicht-Aufbaus bewirken. Wie in Fig. 6 zu sehen ist, sind die reflektierten Farben um so mehr zur Farbe Blau verschoben, je dünner der Dünnfilmschicht-Interferenzschicht-Aufbau ausgebildet ist.

Wie weiter in Fig. 6 zu sehen ist, erscheint der Dünnfilmschicht-Interferenzschicht-Aufbau größtenteils transparent, wenn die effektive Dicke t < 100 nm ist.

Dies korrespondiert für einen Dünnfilmschicht-Interferenzschicht-Aufbau mit einem Farbverschiebungseffekt am unteren Ende des Spektrums des sichtbaren Lichts (Rot) mit einem Dickenreduktionsfaktor $1/\varepsilon = t/t_0 = 100$ nm/415 nm = 0,24. Durch Vergleich mit der oben aufgeführten Tabelle 1 und Fig. 3 folgt daraus, dass das Tiefen zu Breiten Verhältnis h/d > 2,4 sein muss, um den Dickenreduktionsfaktor $\varepsilon$ = 4,15 zu erhalten.

Weiter ist zu erkennen, dass das Tiefen zu Breiten Verhältnis zur Ausbildung von Transparenz im Vergleich zu rotem Licht kleiner sein kann, wenn es sich um grünes oder blaues Licht handelt. Weiter ist das Ergebnis auch abhängig vom Betrachtungswinkel. Das Tiefen zu Breiten Verhältnis sollte so für einen Farbverschiebungseffekt am oberen Ende des Spektrums des sichtbaren Lichts h/d > 0,5 sein. Da, wie bereits oben dargestellt, eine starke Verringerung der effektiven Dicke des Dünnfilmschicht-Interferenzschicht-Aufbau ab einem Tiefen zu Breiten Verhältnis h/d ≥ 1 eintritt, wird das Tiefen zu Breiten Verhältnis im Regelfall ≥ 1 zu wählen sein, um den Farbwechseleffekt im Bereich der Reliefstruktur sicher zu unterdrücken.

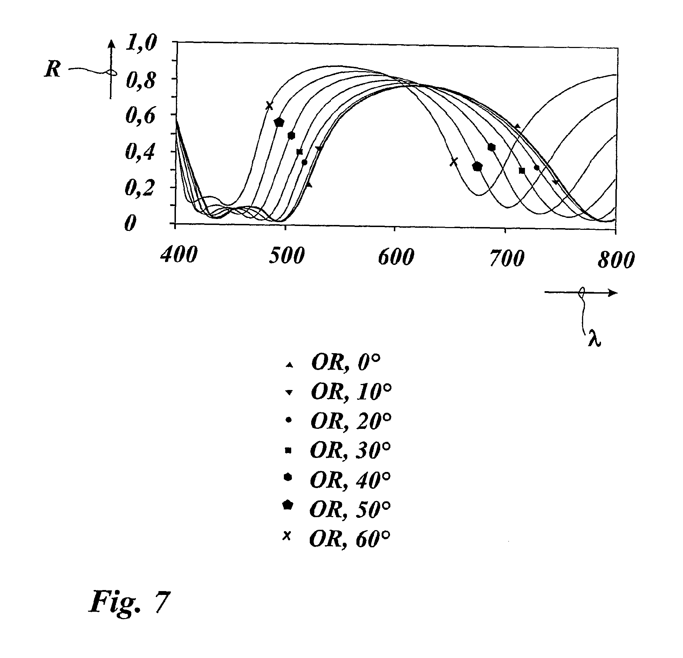

Fig. 7 zeigt nun in einer graphischen Darstellung die mit dem Computerprogramm "Gsolver" berechnete Abhängigkeit des Reflexionsgrades R von der Wellenlänge und von dem Einfallswinkel OR-polarisierten Lichtes. Es wurde die vorstehend in Fig. 6 beschriebene Dünnfilmschicht-Interferenzschicht-Aufbau zugrunde gelegt. Es ist in Fig. 7 zu erkennen, dass mit wachsendem Einfallswinkel des Lichtes eine Farbverschiebung des Reflexionsgrades in Richtung Blau eintritt. Es ist davon auszugehen, daß auch hier bei einem Tiefen zu Breiten Verhältnis h/d > 2,4 der Dünnfilmschicht-Interferenzschicht-Aufbau - oder bereits bei einem kleineren Tiefen zu Breiten Verhältnis (siehe oben) - transparent erscheint.

Ein Liniengitter einer Periode d und einer Profiltiefe h kann durch folgende Gleichung beschrieben werden:

$$f(x,y) = h\sin^2\left(\frac{\pi x}{d}\right)$$

Hieraus ergeben sich folgende partiellen Differentialquotienten:

$$f_x = \frac{\partial}{\partial x} h\sin^2\left(\frac{\pi x}{d}\right) = \frac{h\pi}{d}\sin\left(\frac{2\pi x}{d}\right)$$

$$f_y = \frac{\partial}{\partial y} h\sin^2\left(\frac{\pi x}{d}\right) = 0$$

Die effektive Oberfläche kann so durch folgende Gleichung beschrieben werden:

$$S = \iint_R \sqrt{1 + f_x^2 + f_y^2} \quad dA$$

$$= \int_0^d \int_0^d \sqrt{1 + \left(\frac{h\pi}{d}\right)^2\left[\left(\sin\left(\frac{2\pi x}{d}\right)\right)^2\right]} dx dy$$

$$= \frac{2d^2}{\pi} E\left(\frac{-h^2\pi^2}{d^2}\right)$$

E (α) repräsentiert hierbei das gesamte elliptische Integral zweiter Ordnung.

Auch hier haben numerische Lösungen dieser Gleichung überraschend gezeigt, dass sich der Faktor $\varepsilon$ signifikant erhöht, wenn das Tiefen zu Breiten Verhältnis h/d > 1 ist. Überraschenderweise hat sich hier weiter gezeigt, dass die Erhöhung des Faktors $\varepsilon$ bei einem Lineargitter größer als bei dem vorher betrachteten Kreuzgitter mit demselben Tiefen zu Breiten Verhältnis ist.

Beispielsweise ergibt sich bei einem Tiefen zu Breiten Verhältnis h = 2d ein Faktor $\varepsilon$ = 4,2, der größer als der Wert für das oben betrachtete Kreuzgitter ist.

Bezüglich der Wahl des Tiefen zu Breiten Verhältnisses zur Unterdrückung des Farbverschiebungseffekts gelten die obigen Überlegungen sinngemäß.

Der beschriebene Effekt der Transparenz des Dünnfilmschicht-Interferenzschicht-Aufbaus in Bereichen mit hohem Tiefen zu Breiten Verhältnis ist nicht auf die vorstehend beschriebene Ausbildung des Dünnfilmschicht-Interferenzschicht-Aufbaus beschränkt. In einem zweiten Ausführungsbeispiel eines Dünnfilmschicht-Interferenzschicht-Aufbaus kann es sich um einen Dünnfilmschicht-Interferenzschicht-Aufbau handeln, der aus einer $TiO_2$-Schicht (Distanzschicht) mit einer Dicke von 275 nm besteht und die zwischen zwei Kunststoffschichten angeordnet ist, die beispielsweise eine Brechzahl von 1,5 aufweisen. In einem dritten Ausführungsbeispiel kann es sich um drei Schichten handeln, die zwischen zwei Kunststoffschichten angeordnet sind, und zwar um eine Cr-Schicht mit einer Dicke von 8 nm, eine $MgF_2$-Schicht mit einer Dicke von 215 nm und eine Al-Schicht mit einer Dicke von 50 nm.

Vorzugsweise ist vorgesehen, daß es sich bei den Reliefstrukturen um Reliefstrukturen handelt, deren Periode d, d.h. deren Abstand zwischen zwei Erhebungen zu d < λ oder noch weiter vorzugsweise zu d < λ/2 gewählt ist, wobei λ vorzugsweise die Wellenlänge des bei senkrechter Betrachtung auftretenden Farbeffekts ist. Auf diese Weise kann sichergestellt werden, dass im Bereich der Reliefstruktur keinen Diffraktionseffekte auftreten, die das Erscheinungsbild für den menschlichen Betrachter beeinflussen. Der Bereich des sichtbaren Lichts liegt zwischen 450nm und 670nm. Für die Wellenlänge λ = 555 nm, für die das menschliche Auge am empfindlichsten ist, sollte deshalb d < 555 nm sein. Untersuchungen haben gezeigt, dass störende Diffraktionseffekte weitgehend verhindert werden können, wenn d < 450 nm ist, bevorzugt im Bereich von 300 nm - 350 nm liegt.

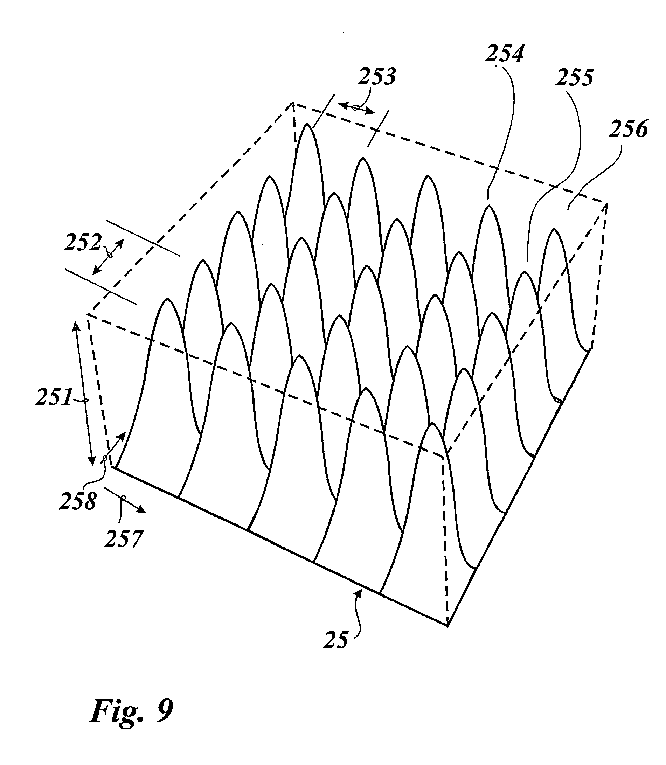

Fig. 9 zeigt nun eine schematische Darstellung eines Ausschnitts einer für die Reliefstruktur 25 verwendbaren Reliefstruktur, die zur Unterdrückung der Erzeugung eines Farbverschiebungseffekts durch den Dünnfilmschicht-Interferenzschicht-Aufbau 23 eingerichtet ist.

Wie in Fig. 9 dargestellt, handelt es sich bei der Reliefstruktur 25 um eine periodische Funktion f (x, y), wobei zwei Pfeile 257 und 258 in Fig. 4 die zugehörigen Koordinaten-Achsen repräsentieren. Die Funktion f (x, y) variiert die Tiefe der Reliefstruktur 25 periodisch, beispielsweise sinusförmig, sowohl in x- als auch in y-Richtung. Dadurch ergibt sich das in Fig. 4 dargestellte Reliefprofil mit einer Vielzahl von Erhebungen, beispielsweise den Erhebungen 254, 255 und 256, die jeweils eine Periodenlänge der Funktion f (x, y) voneinander entfernt sind, beispielsweise in x-Richtung eine Periodenlänge 253 voneinander entfernt sind und in y-Richtung eine Periodenlänge 252 voneinander entfernt sind. Die Periodenlängen 252 und 253 sind hierbei so gewählt, dass sie kleiner oder gleich der Strukturtiefe der Reliefstruktur 25, nämlich kleiner als eine Strukturtiefe 251, sind.

Die in Fig. 9 gezeigte Reliefstruktur 25 hat so beispielsweise Periodenlängen 252 und 253 von 330 nm und eine Strukturtiefe von mehr als 500 nm.

Es ist hierbei auch möglich, sowohl die Profilform, die Periodenlängen 252 und 253 und die Profiltiefe 251 abweichend von der Darstellung nach Fig. 9 zu gestalten. Wesentlich ist hierbei, dass wenigstens eine der Periodenlängen 252 und 253 kleiner oder gleich der Strukturtiefe 251 sind und dass die Periodenlängen 252 und 253 weniger als 200 μm (Auflösungsgrenze des menschlichen Auges) voneinander entfernt sind. Besonders gute Ergebnisse werden erzielt, wenn wenigstens eine der Periodenlängen 252 und 253 kleiner als die Grenzwellenlänge des sichtbaren Lichtes ist.

Weiter ist es auch möglich, die Unterdrückung der Erzeugung eines Farbverschiebungseffekts durch den Dünnfilmschicht-Interferenzschicht-Aufbau mittels Reliefstrukturen zu erzielen, die ein komplexes Oberflächenprofil mit Erhebungen und Vertiefungen unterschiedlicher Höhe aufweisen. Bei derartigen Oberflächenprofilen kann es sich hierbei auch um stochastische Oberflächenprofile handeln. Bei derartigen Oberflächenprofilen wird eine Unterdrückung des Farbverschiebungseffekts in der Regel erreicht, wenn der mittlere Abstand benachbarter Erhebungen der Reliefstruktur kleiner als die mittlere Profiltiefe der Reliefstruktur ist und benachbarte Erhebungen der Reliefstruktur weniger als 200 μm voneinander entfernt sind. Liegt der von der dem Dünnfilmschicht-Interferenzschicht-Aufbau generierte Farbverschiebungseffekt im Bereich von Grün oder Blau, so ist eine Unterdrückung des Effekts - wie bereits oben für periodische Strukturen gezeigt - in der Regel durch ein mittleres Tiefen zu Breiten Verhältnis erzielbar, das größer als 0,5 ist. Bevorzugt wird hierbei der mittlere Abstand benachbarter Erhebungen kleiner als 30 μm gewählt, so dass es sich bei der Reliefstruktur um eine spezielle diffraktive Reliefstruktur handelt.

Weiter ist es vorteilhaft, Kombinations-Strukturen wie eine Kombinations-Struktur aus Mikro- und Makro-Struktur zu verwenden, bei denen eine grobe und tiefe erste Struktur von einer feinen und hochfrequenten zweiten Struktur überlagert wird. Beispiele derartiger Kombinations-Strukturen sind eine grobe asymmetrische Struktur mit einem feinen Sinusgitter oder eine grobe Dreieckstruktur mit einem feinen Sinusgitter. Es hat sich gezeigt, dass mittels einer derartigen Kombinations-Struktur die oben beschriebenen Anforderungen zur Erzielung einer guten Unterdrückung des Farbverschiebungseffekts leichter erzielbar sind.

Der Dünnfilmschicht-Interferenzschicht-Aufbau 23 zeichnet sich prinzipiell durch einen Interferenzschicht-Aufbau aus, der blickwinkelabhängige Farbverschiebungen erzeugt. Der Dünnfilmschicht-Interferenzschicht-Aufbau 23 kann hierbei als reflektives Element oder als transmissives Element aufgebaut sein. Nähere Angaben zu für den Dünnfilmschicht-Interferenzschicht-Aufbau 23 verwendbaren Dünnfilmschichtsystemen sind beispielsweise dem Kapitel 13 des Buches "Optical document security", R.L. van Renesse, ed., Artech House, London, von J.A. Dobrowolski zu entnehmen. Für den Aufbau des Dünnfilmschicht-Interferenzschicht-Aufbaus 23 bestehen hierbei folgende prinzipielle Möglichkeiten:

Der Dünnfilmschicht-Interferenzschicht-Aufbau weist so beispielsweise eine Absorptionsschicht (vorzugsweise mit 30 % bis 65 % Transmission), eine transparente Distanzschicht als farbwechselerzeugende Schicht ($\lambda$2 oder $\lambda$/4 Schicht), eine Metallschicht als reflektierende Schicht (reflektives Element) oder eine optische Trennschicht (transmissives Element) auf. Hierbei ist es auch möglich, dass die Klebeschicht 24 als optische Trennschicht wirkt, wenn deren Brechungsindex sich deutlich von dem Brechungsindex der Distanzschicht unterscheidet. Wirkt der Dünnfilmschicht-Interferenzschicht-Aufbau 23 als reflektives Element, so ist die Schichtdicke der Distanzschicht so zu wählen, dass die $\lambda$/4 Bedingung erfüllt ist. Wirkt der Dünnfilmschicht-Interferenzschicht-Aufbau 23 als transmissive Schicht, hat die Distanzschicht die $\lambda$/2 Bedingung zu erfüllen.

Ein derartiger Dünnfilmschicht-Interferenzschicht-Aufbau wird beispielsweise von einem Dünnfilmschichtsystem gebildet, das aus ein oder mehreren dielektrischen und metallischen Schichten aufgebaut ist. Beispielsweise besteht der Dünnfilmschicht-Interferenzschicht-Aufbau 23 so aus einer Chromschicht einer Dicke von 8 nm, einer $MgF_2$-Schicht einer Dicke von 215 nm und einer Al-Schicht einer Dicke von 50 nm.

Weiter ist es auch möglich, der Dünnfilmschicht-Interferenzschicht-Aufbau 23 aus einer Abfolge von hoch und niedrig brechenden Schichten aufzubauen. Ein derartiger Dünnfilmschicht-Interferenzschicht-Aufbau besteht beispielsweise aus mehreren aufeinanderfolgenden dielektrischen Schichten mit unterschiedlichem Brechungsindex. Beispielsweise besteht der Dünnfilmschicht-Interferenzschicht-Aufbau 23 aus einer $TiO_2$-Schicht einer Dicke von 70 nm, einer $SiO_2$Schicht einer Dicke von 275 nm als farbwechselerzeugende Distanzschicht und einer $TiO_2$-Schicht von 70 nm. Ein derartiger Dünnfilmschicht-Interferenzschicht-Aufbau besteht aus eine Abfolge von drei bis neun solcher Schichten (ungeradzahlige Anzahl) oder einer Anzahl von zwei bis zehn solcher Schichten (geradzahlige Anzahl). Je höher die Anzahl der Schichten ist, um so schärfer lässt sich die Wellenlänge für den Farbwechsel einstellen.

Weiter ist es auch möglich, dass der Dünnfilmschicht-Interferenzschicht-Aufbau 23 aus einer einzigen Schicht eines Metalloxids mit hohem Brechungsindex besteht, beispielsweise aus einer $TiO_2$-Schicht einer Dicke von 275 nm besteht. Derartige Dünnfilmschichten werden auch als Perlglanzschichten bezeichnet. In diesem Falle hat die Schichtdicke des Dünnfilmschicht-Interferenzschicht-Aufbau die $\lambda$/4 oder $\lambda$/2 Bedingung (je nach dem, ob es sich um reflektives oder transmissives Element handelt) zu erfüllen.

Bevorzugt werden die Schichten des Dünnfilmschicht-Interferenzschicht-Aufbaus 23 mittels Sputtern vollflächig auf die Replizierlackschicht 22 aufgebracht. Je nach dem, ob es sich bei dem Dünnfilmschicht-Interferenzschicht-Aufbau 23 um ein reflektives Element oder ein transmissives Element handeln kann, umfasst der DünnfilmschichtInterferenzschicht-Aufbau 23 hierbei eine Reflexionsschicht, die vorzugsweise aus einer dünnen metallischen Schicht, beispielsweise aus Al, Ag, Cr, Ni, Cu, Au oder einer Kombination dieser Metalle aufgebaut ist.

Anschliessend wird die Klebeschicht 24 auf den Dünnfilmschicht-Interferenzschicht-Aufbau 23 aufgebracht. Bei der Klebeschicht 24 handelt es sich vorzugsweise um eine Schicht aus einem thermisch aktivierbaren Kleber. Je nach Einsatz des Sicherheitselements 11 ist es aber auch möglich, auf die Klebeschicht 24 zu verzichten.

Die Reliefstrukturen 25 und 26 sind hierbei in Bereichen 31 und 33 des Sicherheitselements 11 abgeformt. Die Bereiche 31 und 33 werden von Bereichen 32 umgeben, in denen keine Reliefstrukturen in die Replizierlackschicht 22 abgeformt sind, so dass in diesen Bereichen die Replizierlackschicht 22 eine weitgehend plane Oberfläche zeigt.

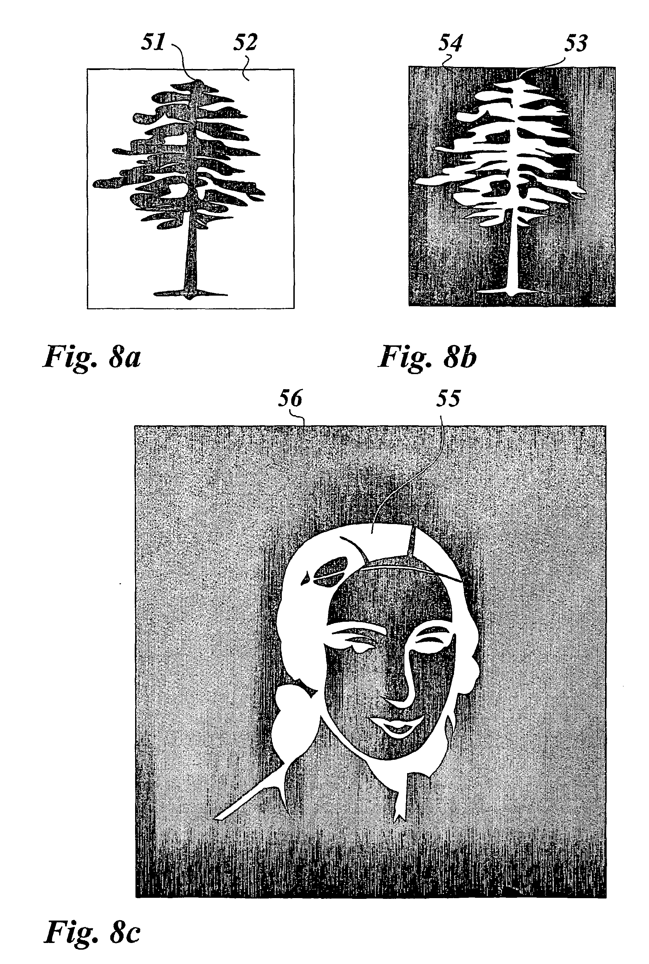

Je nach dem, ob die Bereiche 31 und 33 als Musterbereiche oder als Hintergrundbereiche für ein im Vordergrund stehendes Muster ausgeformt sind, ergeben sich so bei Betrachtung die in Fig. 8a bis Fig. 8c beispielhaft dargestellten Effekte:

Fig. 8a zeigt einen Musterbereich 51, der in Form eines Baumes gestaltet ist, und einen den Musterbereich 51 umschliessenden Hintergrundbereich 52. Der Hintergrundbereich 52 ist mit der Reliefstruktur 25 belegt, so dass im Hintergrundbereich 52 die Erzeugung eines Farbverschiebungseffektes durch den Dünnfilmschicht-Interferenzschicht-Aufbau 23 unterdrückt wird. Im Musterbereich 51 ist keine Reliefstruktur abgeformt, so dass in diesem Bereich der von dem Dünnfilmschicht-Interferenzschicht-Aufbau 23 erzeugte erste Farbverschiebungseffekt sichtbar ist. Es ergibt sich so die Darstellung eines Baumes, dessen Farbe sich abhängig von der Blickrichtung, beispielsweise von einer roten Farbgebung in eine grüne Farbgebung ändert, vor einem Hintergrund, der keinerlei Farbverschiebungseffekte zeigt.

Fig. 8b zeigt einen Musterbereich 53 in Form eines Baumes vor einem Hintergrundbereich 54, wobei die Reliefstruktur 25 in dem Musterbereich 53 abgeformt ist und in dem Hintergrundbereich 54 keine Reliefstruktur abgeformt ist. Damit ergibt sich für den Betrachter der Eindruck eines (durchscheinenden) Baumes, dessen Hintergrund seine Farbe je nach Blickwinkelrichtung ändert.

Fig. 8c zeigt eine Darstellung von Clara Schumann 55 vor einem Hintergrundbereich 56. Auch hier ist die Reliefstruktur 25 in dem die Darstellung von Clara Schumann bildenden Musterbereich angeordnet, so dass sich die Darstellung von Clara Schumann aus dem Kontrast des einem Farbwechsel unterliegenden Hintergrundbereichs 56 und der transparenten Linienführung des Musterbereichs ergibt.

Fig. 2 zeigt eine bevorzugte Anwendung der in Fig. 1 dargestellten Prägefolie.

Fig. 2 zeigt so die Übertragungslage 2 einer Transferfolie, die auf ein zu sicherndes Dokument 4 aufgebracht ist. Die Übertragungslage 2 bildet hierbei ein Sicherheitselement 12, das aus der Schutzlackschicht 21, der Replizierlackschicht 22, dem Dünnfilmschicht-Interferenzschicht-Aufbau 23 und der Klebeschicht 24 aufgebaut ist. In die Replizierlackschicht 22 sind in den Bereichen 31 und 33 die Reliefstrukturen 25 und 26 abgeformt. In dem sie umgebenden Bereichen 32 ist keine Reliefstruktur in die Grenzschicht zwischen der Replizierlackschicht 22 und dem Dünnfilmschicht-Interferenzschicht-Aufbau 23 abgeformt, so dass hier die Grenzschicht weitgehend plan ist. In Bezug auf die Ausgestaltung der Schichten 21, 22, 23 und 24 und der Ausgestaltung der Reliefstrukturen 25 und 26 wird auf die Ausführungen nach Fig. 1 und Fig. 9 verwiesen.

Auf das Dokument 4, bei dem es sich beispielsweise um ein Ausweisdokument handelt, wird zur Personalisierung ein individualisierter Aufdruck 41 beispielsweise mittels eines Thermotransferverfahrens aufgebracht. Sodann wird die Übertragungslage 2 auf das Dokument 4 derart aufgebracht, dass das Sicherheitselement 12 den individualisierten Aufdruck 41 überdeckt. Der Dünnfilmschicht-Interferenzschicht-Aufbau 23 ist in diesem Ausführungsbeispiel als transmissives Element ausgebildet, so dass für den Betrachter der individualisierte Aufdruck 41 durch den Dünnfilmschicht-Interferenzschicht-Aufbau 23 erkennbar ist und der individualisierte Aufdruck 41 in den Bereichen 32 von dem von dem Dünnfilmschicht-Interferenzschicht-Aufbau 23 generierten blickwinkelabhängigen Farbverschiebungseffekt überlagert wird.

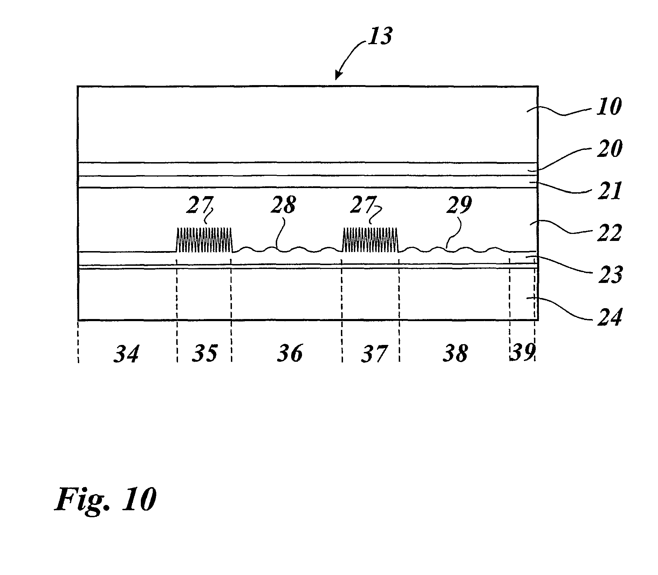

Fig. 10 zeigt ein weiteres Ausführungsbeispiel eines erfindungsgemässen Sicherheitselements 13.

Das Sicherheitselement 13 ist eine Transferfolie, die von einem mehrschichtigen Folienkörper mit der Trägerschicht 10, der Ablöseschicht 20, der Schutzlackschicht 21, der Replizierlackschicht 22, dem Dünnfilmschicht-Interferenzschicht-Aufbau 23 und der Klebeschicht 24 gebildet ist. Die Schichten 10 bis 24 sind entsprechend den gleichlautenden Schichten nach Fig. 1 ausgestaltet. In die Grenzfläche zwischen der Replizierlackschicht 22 und dem Dünnfilmschicht-Interferenzschicht-Aufbau 23 ist in Bereichen 35 und 37 eine Reliefstruktur abgeformt, die entsprechend den Reliefstrukturen 25 und 26 nach Fig. 1 und Fig. 9 ausgestaltet ist. In Bereichen 28 und 29 des Sicherungselements 13 sind in die Grenzflächen Reliefstrukturen 28 und 29 abgeformt. In Bereichen 34 und 39 des Sicherheitselements 13 sind in die Grenzfläche keine Reliefstrukturen abgeformt, so dass in diesen Bereichen die Grenzfläche-weitgehend plan ist.

Bei den Reliefstrukturen 28 und 29 handelt es sich um Reliefstrukturen, die einen optischen Effekt generieren, der sich mit dem von dem Dünnfilmschicht-Interferenzschicht-Aufbau 23 generierten optischen Effekt überlagert.

So handelt es sich bei der Reliefstruktur 28 beispielsweise um eine beugungsoptische Struktur, beispielsweise um ein Dot-Matrix-Hologramm, ein KINEGRAM® oder um ein übliches Beugungsgitter.

Bei der Reliefstruktur 29 handelt es sich beispielsweise um eine Makrostruktur, beispielsweise um eine Struktur mit einem Extremwert-Abstand von mehr als 30 $\mu$m. Weiter kann es sich bei der Reliefstruktur 29 auch um eine Mikrolinsenstruktur oder um eine Mattstruktur, beispielsweise eine anisotrope Mattstruktur mit einem gerichteten Streuverhalten, handeln.

Die Reliefstrukturen 28 und 29 sind hierbei vorzugsweise so gewählt, dass der Abstand zwischen Erhebungen dieser Reliefstrukturen grösser als die Strukturtiefe der Reliefstrukturen ist. Hierdurch wird eine Abschwächung des von dem Dünnfilmschicht-Interferenzschicht-Aufbau 23 erzeugten beugungsoptischen Effektes durch die überlagernden Reliefstrukturen 28 und 29 weitgehend vermieden.

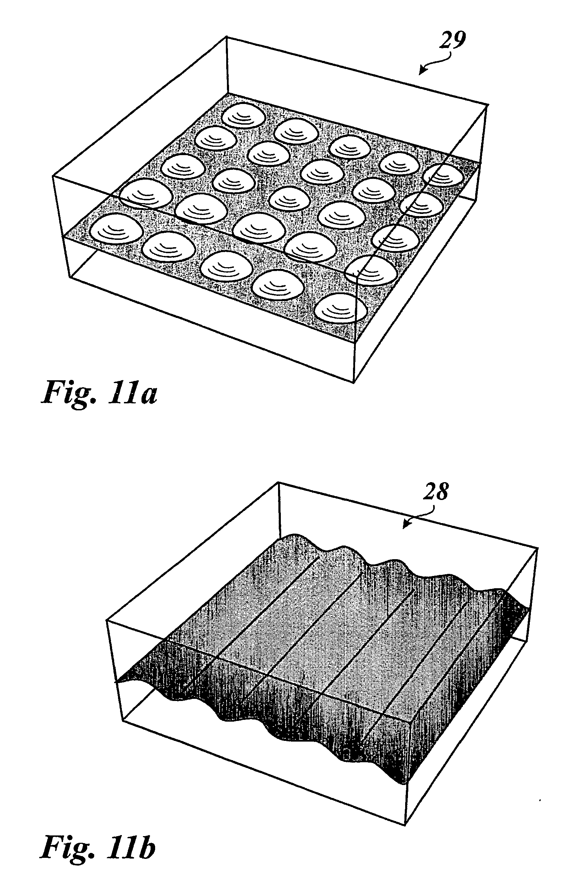

Fig. 11a und Fig. 11b zeigen beispielhaft schematische Darstellungen eines Ausschnitts der Reliefstrukturen 28 (Fig. 11 b) und 29 (Fig. 11a).

Es wird hierbei darauf verwiesen, dass die Figuren Fig. 1, Fig. 2, Fig. 9, Fig. 10, Fig. 11a und Fig. 11b schematische Darstellungen sind, bei denen die Grössenabmessungen und das Verhältnis der Grössenabmessungen nicht den tatsächlichen Gegebenheiten entsprechen.

Durch die Ausgestaltung des Sicherheitselements nach Fig. 10 wird erreicht, dass in dem Bereich 36 für den Betrachter eine Überlagerung der von dem Dünnfilmschicht-Interferenzschicht-Aufbau 23 und von der Reliefstruktur 28 erzeugten optischen Effekte erkennbar ist. In den, den Bereich 36 umgebenden Bereichen 35 und 37 wird der von dem Dünnfilmschicht-Interferenzschicht-Aufbau 23 erzeugte optische Effekt durch die Reliefstruktur 27 unterdrückt, so dass für den Betrachter in diesem Bereich kein optisch variables Sicherheitsmerkmal erkennbar ist. Dies führt dazu, dass der Bereich 36, in dem sich beide optischen Effekte überlagern, präzise und scharf gegenüber den umgebenden Bereichen 35 und 37 abgegrenzt ist, in denen kein optisch variables Sicherheitsmerkmal erkennbar ist. Bei entsprechender Ausgestaltung des von der Reliefstruktur 28 erzeugten Sicherheitsmerkmals sind bereits kleine Abweichungen der sich überlagernden Sicherheitsmerkmale klar erkennbar, so dass eine Nachahmung mittels anderer Technologien, die nicht dieses hohe Maß an Passergenauigkeit bieten, sofort erkennbar ist.

In den Bereichen 34 und 39 ergibt sich für den Betrachter weiter der von dem Dünnfilmschicht-Interferenzschicht-Aufbau 23 erzeugte blickwinkelabhängige Farbverschiebungseffekt. In dem Bereich 39 ergibt sich für den Betrachter ein optischer Effekt, der sich aus der Überlagerung des blickwinkelabhängigen Farbverschiebungseffekts des Dünnfilmschicht-Interferenzschicht-Aufbaus 23 und dem von der Reliefstruktur 29 generierten optischen Effekt ergibt. Damit ergibt sich für den Betrachter in den Bereichen 34, 35, 36, 37, 38 und 39 jeweils ein anderer Betrachtungseindruck.

Weiter ist es auch möglich, eine partiell ausgeformte Metallschicht zwischen der Replizierlackschicht 22 und der Dünnfilmschicht 23 anzuordnen. Diese partielle Metallschicht wird dazu verwendet, um Bereiche zu schaffen, in denen der von den Reliefstrukturen 28 und 29 erzeugte optische Effekt entkoppelt von dem von dem Dünnfilmschicht-Interferenzschicht-Aufbau 23 generierten optischen Effekt erkennbar sein soll. Die partielle Metallschicht deckt so beispielsweise Teilbereiche des Bereiches 36 und/oder des Bereiches 38 ab. Weiter ist es auch möglich, die partielle Metallschicht in (Teil-)Bereichen 34 und 39 vorzusehen und damit partielle reflektive Flächen als weitere Sicherheitsmerkmale des Sicherheitselements 13 vorzusehen.

**Patentansprüche**

1. Sicherheitselement (11, 12, 13) in Form eines mehrschichtigen Folienkörpers, wobei der Folienkörper eine Replizierlackschicht (22) und einen auf die Replizierlackschicht (22) in einer nominalen Dicke $t_0$ aufgebrachten Dünnfilmschicht-Interferenzschicht-Aufbau (23), welcher mindestens eine die $\lambda/4$- oder $\lambda/2$ - Bedingung für den Bereich des sichtbaren Lichts erfüllende Distanzschicht umfasst und einen blickwinkelabhängigen ersten Farbverschiebungseffekt mittels Interferenz erzeugt, aufweist und in einer von Koordinatenachsen x und y (257, 258) aufgespannten Ebene in eine Grenzfläche zwischen der Replizierlackschicht (22) und dem DünnfilmschichtInterferenzschicht-Aufbau (23) in einem ersten Bereich (31, 33, 35, 37) des Sicherheitselements (11, 92, 13) eine erste Reliefstruktur (25, 26, 27) abgeformt ist,
**dadurch gekennzeichnet,**
**dass** die erste Reliefstruktur (25, 26, 27) derart ausgebildet ist, dass die Dicke $t_0$ des Dünnfilmschicht-Interferenzschicht-Aufbaus (23) im Bereich der ersten Reliefstruktur (25, 26, 27) derart reduziert ist, dass der erste Farbverschiebungseffekt des Dünnfilmschicht-Interferenzschicht-Aufbaus (23) unterdrückt ist, so dass in dem ersten Bereich des Sicherheitselements (31, 33, 35, 37), in dem die erste Reliefstruktur (25, 26, 27) abgeformt ist, der erste Farbverschiebungseffekt des Dünnfilmschicht-Interferenzschicht-Aufbaus (23) nicht vorhanden ist und in einem zweiten Bereich (32, 34, 36, 38, 39) des Sicherheitsetements (11, 12, 13), in dem die erste Reliefstruktur (25, 26, 27) nicht abgeformt ist, der von dem Dünnfilmschicht-Interferenzschicht-Aufbau (23) erzeugte erste Farbverschiebungseffekt vorhanden ist.

2. Sicherheitselement nach Anspruch 1,
**dadurch gekennzeichnet,**
**dass** die erste Reliefstruktur (25, 26, 27) eine Struktur mit einem mittleren Tiefen zu Breiten Verhältnis der einzelnen Strukturelemente von größer als 0,5 ist.

3. Sicherheitselement nach einem der vorhergehenden Ansprüche,
**dadurch gekennzeichnet,**
**dass** das Tiefen zu Breiten Verhältnis der einzelnen Strukturelemente der ersten Reliefstruktur so groß gewählt ist, dass kein mittels Interferenz erzeugter Farbverschiebungseffekt in dem ersten Bereich des Sicherheitselements (31, 33, 35, 37) vorhanden ist, in dem die erste Reliefstruktur (25, 26, 27) abgeformt ist.

4. Sicherheitselement nach einem der vorhergehenden Ansprüche,
**dadurch gekennzeichnet,**
**dass** die erste Reliefstruktur (25, 26, 27) eine diffraktive Struktur mit einem Tiefen zu Breiten Verhältnis der einzelnen Strukturelemente der Reliefstruktur im Bereich 0,5 bis 10 ist.

5. Sicherheitselement nach Anspruch 4,
**dadurch gekennzeichnet,**
**dass** das Tiefen zu Breiten Verhältnis größer als 1 ist.

6. Sicherheitselement nach einem der vorhergehenden Ansprüche,
**dadurch gekennzeichnet,**
**dass** das Tiefen zu Breiten Verhältnis der ersten Reliefstruktur so groß gewählt ist, dass die effektive Dicke einer farbwechselerzeugenden Distanzschicht des Dünnfilmschicht-Interferenzschicht-Aufbaus durch die erste Reliefstruktur bedingt im Bereich der ersten Reliefstruktur so stark verringert ist, dass die Distanzschicht die $\lambda/2$ oder $\lambda/4$ Bedingung für den Bereich des sichtbaren Lichts nicht mehr erfüllt.

7. Sicherheitselement nach einem der vorhergehenden Ansprüche,
**dadurch gekennzeichnet,**
**dass** das Tiefen zu Breiten Verhältnis der einzelnen Strukturelemente der ersten Reliefstruktur so groß gewählt ist, dass ein zweiter Farbverschiebungseffekt in dem ersten Bereich des Sicherheitselements (31, 33, 35, 37) vorhanden ist, der sich von dem in dem zweiten Bereich des Sicherheitselements durch den Dünnfilmschicht-Interferenzschicht-Aufbau erzeugten ersten Farbverschiebungseffekt unterscheidet.

8. Sicherheitselement nach einem der vorhergehenden Ansprüche,
**dadurch gekennzeichnet**
**dass** die Tiefe der ersten Reliefstruktur (25, 26, 27) sowohl in x-Richtung als auch in y-Richtung variiert, dass der mittlere Abstand benachbarter Erhebungen (254, 255, 256) der ersten Reliefstruktur (25, 26, 27) kleiner als die mittlere Profiltiefe (251) der ersten Reliefstruktur ist und dass benachbarte Erhebungen (254, 255, 256) der ersten Reliefstruktur weniger als 200 μm voneinander entfernt sind.

9. Sicherheitselement nach Anspruch 8,
**dadurch gekennzeichnet,**
**dass** die erste Reliefstruktur (25, 26, 27) eine periodische Funktion der Koordinaten x und y ist, die die Tiefe der ersten Reliefstruktur sowohl in x-Richtung als auch in y-Richtung periodisch variiert, und dass die Perioden längen (252, 253) der Funktion kleiner oder gleich der Strukturtiefe (251) der ersten Reliefstruktur (25, 26, 27) ist.

10. Sicherheitselement nach Anspruch 8,
**dadurch gekennzeichnet,**
**dass** die erste Reliefstruktur (25, 26, 27) ein aus zwei im wesentlichen rechtwinkelig zueinander angeordneten Basisgittern zusammengesetztes Kreuzgitter ist, wobei die Periodenlängen der Basisgitter kleiner oder gleich der Strukturtiefe der ersten Reliefstruktur (25, 26, 27) sind.

11. Sicherheitselement nach einem der vorhergehenden Ansprüche,
**dadurch gekennzeichnet,**
**dass** der mittlere Abstand benachbarter Erhebungen bzw. mindestens eine der Periodenlängen kürzer als 400 nm ist.

12. Sicherheitselement nach einem der vorhergehenden Ansprüche,
**dadurch gekennzeichnet,**
**dass** der mittlere Abstand benachbarter Erhebungen (254, 255, 256) der ersten Reliefstruktur (25, 26, 27) kleiner als die Grenzwellenlänge des sichtbaren Lichts, bevorzugt kleiner als die Hälfte der Grenzwellenlänge des sichtbaren Lichts ist.

13. Sicherheitselement nach Anspruch 1,
**dadurch gekennzeichnet,**
**dass** der zweite Bereich (32, 34, 36, 38) ein Musterbereich (51) ist und der erste Bereich (31, 33, 35, 37) ein Hintergrundbereich (52) ist.

14. Sicherheitselement nach Anspruch 13,
**dadurch gekennzeichnet,**
**dass** der zweite Bereich (32, 34, 36, 38) ein Musterbereich (51) in Form eines Logos oder eines Textes ist.

15. Sicherheitselement nach einem der vorhergehenden Ansprüche,
**dadurch gekennzeichnet,**
**dass** in dem zweiten Bereich (36, 38) eine zweite Reliefstruktur (28, 29) in der Grenzfläche abgeformt ist, wobei sich ein von der zweiten Reliefstruktur (28, 29) generierter optischer Effekt mit dem von dem Dünnfilmschicht-Interferenzschicht-Aufbau generierten ersten Farbverschiebungseffekt überlagert.

16. Sicherheitselement nach einem der vorhergehenden Ansprüche,
**dadurch gekennzeichnet,**
**dass** die zweite Reliefstruktur (28, 29) eine Reliefstruktur mit einem Tiefen zu Breiten Verhältnis der einzelnen Strukturelemente der Reliefstruktur von kleiner als 0,2 ist.

17. Sicherheitselement nach Anspruch 16,
**dadurch gekennzeichnet,**
**dass** der erste und der zweite Bereich unmittelbar aneinander angrenzen.

18. Sicherheitselement nach Anspruch 16,

**dadurch gekennzeichnet,**
**dass** die Gitterperiode der zweiten Reliefstruktur (28, 29) größer als die Strukturtiefe der zweiten Reliefstruktur ist.

19. Sicherheitselement nach Anspruch 16,
    **dadurch gekennzeichnet,**
    **dass** die zweite Reliefstruktur (28, 29) eine beugungsoptisch wirkende Struktur, insbesondere eine ein Hologramm generierende Reliefstruktur, ist:

20. Sicherheitselement nach Anspruch 16,
    **dadurch gekennzeichnet,**
    **dass** die zweite Reliefstruktur eine Makrostruktur ist.

21. Sicherheitselement nach Anspruch 16,
    **dadurch gekennzeichnet,**
    **dass** die zweite Reliefstruktur eine Mattstruktur ist.

22. Sicherheitselement nach einem der vorhergehenden Ansprüche,
    **dadurch gekennzeichnet,**
    **dass** der Dünnfilmschicht-Interferenzschicht-Aufbau (23) ein transmissiver Dünnfilmschicht-Interferenzschicht-Aufbau ist.

23. Sicherheitselement nach einem der Ansprüche 1 bis 21,
    **dadurch gekennzeichnet,**
    **dass** der Dünnfilmschicht-Interferenzschicht-Aufbau ein reflektiver Dünnfilmschicht-Interferenzschicht-Aufbau ist.

24. Sicherheitselement nach einem der vorhergehenden Ansprüche,
    **dadurch gekennzeichnet,**
    **dass** der Dünnfilmschicht-Interferenzschicht-Aufbau ein aus mehreren dielektrischen Schichten bestehendes Dünnfilmschichtsystem ist.

25. Sicherheitselement nach einem der Ansprüche 1 bis 23,
    **dadurch gekennzeichnet,**
    **dass** der Dünnfilmschicht-Interferenzschicht-Aufbau ein aus mehreren dielektrischen und metallischen Schichten bestehendes Dünnfilmschichtsystem ist.

26. Sicherheitselement nach einem der Ansprüche 1 bis 23,
    **dadurch gekennzeichnet,**
    **dass** der Dünnfilmschicht-Interferenzschicht-Aufbau aus einer Perlglanzschicht besteht.

27. Sicherheitselement nach einem der Ansprüche 24 bis 26,
    **dadurch gekennzeichnet,**
    **dass** der Dünnflmschicht-Interferenzschicht-Aufbau eine Reflexionsschicht aufweist.

28. Sicherheitselement nach einem der vorhergehenden Ansprüche,
    **dadurch gekennzeichnet,**
    **dass** partiell eine Reflexionsschicht zwischen der Replizierlackschicht und dem Dünnfilmschicht-Interferenzschicht-Aufbau angeordnet ist.

29. Sicherheitselement nach einem der vorhergehenden Ansprüche,
    **dadurch gekennzeichnet,**
    **dass** der mehrschichtige Folienkörper (11) eine Transferfolie, insbesondere eine Heißprägefolie, ist.

30. Sicherheitsdokument (2), insbesondere Banknote oder Reisepass, welches ein Sicherheitselement (12) nach einem der vorhergehenden Ansprüche aufweist.

31. Verfahren zur Herstellung eines Sicherheitselements (11, 12, 13) in Form eines mehrschichtigen Folienkörpers, wobei in eine Replizierlackschicht (22) des mehrschichtigen Folienkörpers in einem ersten Bereich des Sicherheitselements (11, 12, 13) eine erste Reliefstruktur (25, 26, 27) abgeformt wird und auf die Replizierlackschicht weiter in einer nominalen Dicke to ein Dünnfilmschicht-Interferenzschicht-Aufbau (23) aufgebracht wird, welcher mindestens eine die $\lambda/4$- oder $\lambda/2$ - Bedingung für den Bereich des sichtbaren Lichts erfüllende Distanzschicht umfasst und einen blickwinkelabhängigen ersten Farbverschiebungseffekt mittels Interferenz erzeugt,
**dadurch gekenntzeichnet,**
dass die erste Reliefstruktur (25, 26, 27) in dem ersten Bereich (31, 33, 35, 37) des Sicherheitselements derart ausgeformt wird, dass die Dicke $t_0$ des Dünnfilmschicht-Interferenzschicht-Aufbaus (23) im Bereich der ersten Reliefstruktur(25, 26, 27) derart reduziert ist, dass der erste Farbverschiebungseffekt des Dünnfilmschicht-Interferenzschicht-Aufbaus (23) unterdrückt wird, so dass in dem ersten Bereiche(31, 33, 35, 37) des Sicherheitselements, in dem die erste Reliefstruktur (25, 26, 27) abgeformt ist, kein erster Farbverschiebungseffekt ausgebildet wird und in einem zweiten Bereich (32, 34, 36, 38, 39) des Sicherheitselements, in dem die erste Reliefstruktur (25, 26, 27) nicht vorgesehen ist, der erste Farbverschiebungseffekt des Dünnfilmschicht-Interferenzschicht-Aufbaus (23) ausgebildet wird.

32. Verfahren nach Anspruch 31,
**dadurch gekennzeichnet,**
**dass** die erste Reliefstruktur mittels UV-Replikation in der Replizierlackschicht abgeformt wird.

33. Verfahren nach Anspruch 31,
**dadurch gekennzeichnet,**
**dass** der Dünnfilmschicht-Interferenzschicht-Aufbau durch Sputtern oder Aufdampfen auf die Replizierlackschicht aufgebracht wird.

34. Verfahren nach Anspruch 31,
**dadurch gekennzeichnet,**
**dass** eine Distanzschicht des Dünnfilmschicht-Interferenzschicht-Aufbaus durch Sputtern oder Aufdampfen im ersten und zweiten Bereich in gleicher Flächendichte aufgebracht wird.

35. Verfahren nach Anspruch 31,
**dadurch gekennzeichnet,**
**dass** die erste Reliefstruktur (25, 26, 27) in dem ersten Bereich (31, 33, 35, 37) des Sicherheitselements derart ausgeformt wird, dass die Dicke to des Dünnfilmschicht-Interferenzschicht-Aufbaus (23) im Bereich der ersten Reliefstruktur (25, 26, 27) derart reduziert ist, dass der durch den Dünnfilmschicht-Interferenzschicht-Aufbau (23) erzeugte erste Farbverschiebungseffekt verändert wird, so dass in dem ersten Bereich (31, 33, 35, 37) des Sicherheitselements, in dem die erste Reliefstruktur (25, 26, 27) abgeformt ist, von dem Dünnfilmschicht-Interferenzschicht-Aufbau reduzierter Dicke ein zweiter Farbverschiebungseffekt erzeugt wird.

36. Verfahren nach Anspruch 35,
**dadurch gekennzeichnet,**
**dass** das Tiefen zu Breiten Verhältnis der einzelnen Strukturelemente der ersten Reliefstruktur so groß gewählt ist, dass sich der zweite Farbverschiebungseffekt, der in dem ersten Bereich des Sicherheitselements (31, 33, 35, 37) vorhanden ist, von dem ersten Farbverschiebungseffekt, der in dem zweiten Bereich des Sicherheitselements vorhanden ist, unterscheidet.

37. Verfahren nach Anspruch 36;
**dadurch gekennzeichnet,**
**dass** das Tiefen zu Breiten Verhältnis größer als 0,5 ist.

38. Verfahren nach Anspruch 35,
**dadurch gekennzeichnet,**
**dass** eine, sich von der ersten Reliefstruktur unterscheidende zweite Reliefstruktur in einem dritten Bereich (31, 33, 35, 37) des Sicherheitselements ausgeformt wird, die den durch den Dünnfilmschicht-InterFerenzschicht-Aufbau (23) erzeugten ersten Farbverschiebungseffekt verändert, so dass in dem dritten Bereich (31, 33, 35, 37) des Sicherheitselements, in dem die zweite Reliefstruktur (25, 26, 27) vorgesehen ist, von dem Dünnfilmschicht-Interferenzschicht-Aufbau ein dritter Farbverschiebungseffekt erzeugt wird, der sich von dem ersten und dem zweiten Farbverschiebungseffekt unterscheidet.

39. Verfahren nach Anspruch 35,
**dadurch gekennzeichnet,**

**dass** die Tiefen zu Breiten Verhältnisse der einzelnen Strukturelemente der ersten und der zweiten Reliefstruktur unterschiedlich und jeweils so groß gewählt sind, dass sich der erste, zweite und dritte Farbverschiebungseffekt unterscheiden.

**40.** Verfahren nach Anspruch 39,
**dadurch gekennzeichnet,**
**dass** sich das Tiefen zu Breiten Verhältnis der ersten und der zweiten Reliefstruktur um den Faktor 0,2 unterscheiden und jeweils größer als 0,5 gewählt werden.

**Claims**

1.  Security element (11, 12, 13) in the form of a multilayer film body, the film body having a replication lacquer layer (22) and a thin-film layer/interference layer structure (23), which is applied to the replication lacquer layer (22) in a nominal thickness $t_0$, comprises at least one spacer layer satisfying the $\lambda/4$ or $\lambda/2$ condition for the range of visible light, and generates by means of interference a first colour shift effect depending on angle of view, and in a plane defined by coordinate axes x and y (257, 258) a first relief structure (25, 26, 27) being formed in a first region (31, 33, 35, 37) of the security element (11, 12, 13) in a boundary surface between the replication lacquer layer (22) and the thin-film layer/interference layer structure (23), **characterized in that** the first relief structure (25, 26, 27) is designed in such a way that the thickness to of the thin-film layer/interference layer structure (23) is reduced in the region of the first relief structure (25, 26, 27) in such a way that the first colour shift effect of the thin-film layer/ interference layer structure (23) is suppressed so that the first colour shift effect of the thin-film layer/interference layer structure (23) is not present in the first region of the security element (31, 33, 35, 37) in which the first relief structure (25, 26, 27) is formed, and the first colour shift effect, generated by the thin-film layer/interference layer structure (23) is present in a second region (32, 34, 36, 38, 39) of the security element (11, 12, 13) in which the first relief structure (25, 26, 27) is not formed.

2.  Security element according to Claim 1, **characterized in that** the first relief structure (25, 26, 27) is a structure with a mean depth-to-width ratio of the individual structural elements of larger than 0.5.

3.  Security element according to one of the preceding claims, **characterized in that** the depth-to-width ratio of the individual structural elements of the first relief structure is selected to be so large that no colour shift effect generated by means of interference is present in the first region of the security element (31, 33, 35, 37) in which the first relief structure (25, 26, 27) is formed.

4.  Security element according to one of the preceding claims, **characterized in that** the first relief structure (25, 26, 27) is a diffractive structure with a depth-to-width ratio of the individual structural elements of the relief structure in the range of 0.5 to 10.

5.  Security element according to Claim 4, **characterized in that** the depth-to-width ratio is larger than 1.

6.  Security element according to one of the preceding claims, **characterized in that** the depth-to-width ratio of the first relief structure is selected to be so large that the effective thickness of a spacer layer, generating colour shift, of the thin-film layer/interference layer structure determined by the first relief structure is so greatly reduced in the region of the first relief structure that the spacer layer no longer satisfies the $\lambda/2$ or $\lambda/4$ condition for the range of visible light.

7.  Security element according to one of the preceding claims, **characterized in that** the depth-to-width ratio of the individual structural elements of the first relief structure is selected to be so large that there is present in the first region of the security element (31, 33, 35, 37) a second colour shift effect which differs from the first colour shift effect generated in the second region of the security element by the thin-film layer/interference layer structure.

8.  Security element according to one of the preceding claims, **characterized in that** the depth of the first relief structure (25, 26, 27) in the x-direction and in the y-direction varies such that the mean spacing of neighbouring elevations (254, 255, 256) of the first relief structure (25, 26, 27) is smaller than the mean profile depth (251) of the first relief structure, and **in that** neighbouring elevations (254, 255, 256) of the first relief structure are removed from one another by less than 200 $\mu$m.

9. Security element according to Claim 8, **characterized in that** the first relief structure (25, 26, 27) is a periodic function of the coordinates x and y which periodicly varies the depth of the first relief structure in the x-direction and in the y-direction, and **in that** the period length (252, 253) of the function is smaller than or equal to the structure depth (251) of the first relief structure (25, 26, 27).

10. Security element according to Claim 8, **characterized in that** the first relief structure (25, 26, 27) is a cross-grating composed of two base gratings arranged substantially at right angles to one another, the period lengths of the base gratings being greater than or equal to the structure depth of the first relief structure (25, 26, 27).

11. Security element according to one of the preceding claims, **characterized in that** the mean spacing of neighbouring elevations, or at least one of the period lengths is shorter than 400 nm.

12. Security element according to one of the preceding claims, **characterized in that** the mean spacing of neighbouring elevations (254, 255, 256) of the first relief structure (25, 26, 27) is smaller than the limit wavelength of visible light, preferably smaller than half the limit wavelength of visible light.

13. Security element according to Claim 1, **characterized in that** the second region (32, 34, 36, 38) is a pattern region (51), and the first region (31, 33, 35, 37) is a background region (52).

14. Security element according to Claim 13, **characterized in that** the second region (32, 34, 36, 38) is a pattern region (51) in the form of a logo or a text.

15. Security element according to one of the preceding claims, **characterized in that** a second relief structure (28, 29) is formed in the boundary surface in the second region (36, 38), the first colour shift effect generated by the thin-film layer/interference layer structure being superimposed on an optical effect generated by the second relief structure (28, 29).

16. Security element according to one of the preceding claims, **characterized in that** the second relief structure (28, 29) is a relief structure with a depth-to-width ratio of the individual structural elements of the relief structure of smaller than 0.2.

17. Security element according to Claim 16, **characterized in that** the first and second regions are directly adjacent to one another.

18. Security element according to Claim 16, **characterized in that** the grating period of the second relief structure (28, 29) is greater than the structure depth of the second relief structure.

19. Security element according to Claim 16, **characterized in that** the second relief structure (28, 29) is a structure with an optical-diffraction effect, in particular a relief structure generating a hologram.

20. Security element according to Claim 16, **characterized in that** the second relief structure is a macrostructure.

21. Security element according to Claim 16, **characterized in that** the second relief structure is a matt structure.

22. Security element according to one of the preceding claims, **characterized in that** the thin-film layer/interference layer structure (23) is a transmissive thin-film layer/interference layer structure.

23. Security element according to one of Claims 1 to 21, **characterized in that** the thin-film layer/interference layer structure is a reflective thin-film layer/interference layer structure.

24. Security element according to one of the preceding claims, **characterized in that** the thin-film layer/interference layer structure is a thin-film layer system consisting of a plurality of dielectric layers.

25. Security element according to one of Claims 1 to 23, **characterized in that** the thin-film layer/interference layer structure is a thin-film layer system consisting of a plurality of dielectric and metallic layers.

26. Security element according to one of Claims 1 to 23, **characterized in that** the thin-film layer/interference layer structure consists of a pearlescence layer.

27. Security element according to one of Claims 24 to 26, **characterized in that** the thin-film layer/interference layer structure has a reflection layer.

28. Security element according to one of the preceding claims, **characterized in that** a reflection layer is partially arranged between the replication lacquer layer and the thin-film layer/interference layer structure.

29. Security element according to one of the preceding claims, **characterized in that** the multilayer film body (11) is a transfer film, in particular a hot embossing film.

30. Security document (2), in particular a banknote or passport, which has a security element (12) according to one of the preceding claims.

31. Method for producing a security element (11, 12, 13) in the form of a multilayer film body, a first relief structure (25, 26, 27) being formed in a replication lacquer layer (22) of the multilayer film body in a first region of the security element (11, 12, 13) and, furthermore, there being applied to the replication lacquer layer in a nominal thickness to a thin-film layer/interference layer structure (23) which comprises at least one spacer layer satisfying the $\lambda/4$ or $\lambda/2$ condition for the range of visible light and generates by means of interference a first colour shift effect depending on angle of view, **characterized in that** the first relief structure (25, 26, 27) is formed in the first region (31, 33, 35, 37) of the security element in such a way that the thickness to of the thin-film layer/interference layer structure (23) is reduced in the region of the first relief structure (25, 26, 27) in such a way that the first colour shift effect of the thin-film layer/interference layer structure (23) is suppressed so that no first colour shift effect is formed in the first region (31, 33, 35, 37) of the security element in which the first relief structure (25, 26, 27) is formed, and the first colour shift effect of the thin-film layer/interference layer structure (23) is formed in a second region (32, 34, 36, 38, 39) of the security element in which the first relief structure (25, 26, 27) is not provided.

32. Method according to Claim 31, **characterized in that** the first relief structure is formed by means of UV replication in the replication lacquer layer.

33. Method according to Claim 31, **characterized in that** a thin-film layer/interference layer structure is applied to the replication lacquer layer by sputtering or vapour deposition.

34. Method according to Claim 31, **characterized in that** a spacer layer of the thin-film layer/interference layer structure is applied with the same areal density in the first and second regions by sputtering or vapour deposition.

35. Method according to Claim 31, **characterized in that** the first relief structure (25, 26, 27) is shaped in the first region (31, 33, 35, 37) of the security element in such a way that the thickness to of the thin-film layer/interference layer structure (23) is reduced in the region of the first relief structure (25, 26, 27) in such a way that the first colour shift effect generated by the thin-film layer/interference layer structure (23) is changed so that a second colour shift effect is generated by the thin-film layer/interference layer structure of reduced thickness in the first region (31, 33, 35, 37) of the security element in which the first relief structure (25, 26, 27) is formed.

36. Method according to Claim 35, **characterized in that** the depth-to-width- ratio of the individual structural element of the first relief structure is selected to be so large that the second colour shift effect which is present in the first region of the security element (31, 33, 35, 37) differs from the first colour shift effect which is present in the second region of the security element.

37. Method according to Claim 36, **characterized in that** the depth-to-width ratio is larger than 0.5.

38. Method according to Claim 35, **characterized in that** there is shaped in a third region (31, 33, 35, 37) of the security element a second relief structure, which differs from the first relief structure and changes the first colour shift effect generated by the thin-film layer/interference layer structure (23) so that the thin-film layer/interference layer structure generates in the third region (31, 33, 35, 37) of the security element in which the second relief structure (25, 26, 27) is present a third colour shift effect which differs from the first and the second colour shift effects.

39. Method according to Claim 35, **characterized in that** the depth-to-width ratios of the individual structural elements of the first and second relief structures are different and are respectively selected to be so large that the first, second and third colour shift effects differ from one another.

**40.** Method according to Claim 39, **characterized in that** the depth-to-width ratio of the first and the second relief structures differ by the factor of 0.2 and are respectively selected to be larger than 0.5.


**Revendications**

**1.** Elément de sécurité (11, 12, 13) se présentant sous la forme d'un corps en pellicule multicouche, le corps en pellicule présentant une couche de vernis de réplication (22) et une structure de couche d'interférence et de couche de film mince (23) appliquée sur la couche de vernis de réplication (22) dans une épaisseur nominale $t_0$, qui comporte au moins une couche d'écartement remplissant la condition λ/4 ou λ/2 pour la plage de la lumière visible et générant un premier effet de décalage des couleurs dépendant de l'angle de vue par interférence et une première structure en relief (25, 26, 27) étant moulée dans un plan défini par des axes de coordonnées x et y (257, 258) dans une surface limite entre la couche de vernis de réplication (22) et la structure de couche d'interférence et de couche de film mince (23) dans une première zone (31, 33, 35, 37) de l'élément de sécurité (11, 12, 13),
**caractérisé en ce**
**que** la première structure en relief (25, 26, 27) est réalisée de manière à ce que l'épaisseur $t_0$ de la structure de couche d'interférence et de couche de film mince (23) soit réduite dans la zone de la première structure en relief (25, 26, 27) de manière à ce que le premier effet de décalage des couleurs de la structure de couche d'interférence et de couche de film mince (23) soit supprimé de sorte que dans la première zone de l'élément de sécurité (31, 33, 35, 37), dans laquelle est moulée la première structure en relief (25, 26, 27), le premier effet de décalage des couleurs de la structure de couche d'interférence et de couche de film mince (23) ne soit pas présent et dans une seconde zone (32, 34, 36, 38, 39) de l'élément de sécurité (11, 12, 13), dans laquelle la première structure en relief (25, 26, 27) n'est pas moulée, le premier effet de décalage des couleurs généré par la structure de couche d'interférence et de couche de film mince (23) soit présent.

**2.** Elément de sécurité selon la revendication 1,
**caractérisé en ce**
**que** la première structure en relief (25, 26, 27) est une structure avec un rapport profondeur/largeur moyen des éléments structurels individuels supérieur à 0,5.

**3.** Elément de sécurité selon l'une quelconque des revendications précédentes,
**caractérisé en ce**
**que** le rapport profondeur/largeur des éléments structurels individuels de la première structure en relief est choisi si grand qu'aucun effet de décalage des couleurs généré par interférence n'est présent dans la première zone de l'élément de sécurité (31, 33, 35, 37), dans laquelle la première structure en relief (25, 26, 27) est moulée.

**4.** Elément de sécurité selon l'une quelconque des revendications précédentes,
**caractérisé en ce**
**que** la première structure en relief (25, 26, 27) est une structure diffractive avec un rapport profondeur/largeur des éléments structurels individuels de la structure en relief compris entre 0,5 et 10.

**5.** Elément de sécurité selon la revendication 4,
**caractérisé en ce**
**que** le rapport profondeur/largeur est supérieur à 1.

**6.** Elément de sécurité selon l'une quelconque des revendications précédentes,
**caractérisé en ce**
**que** le rapport profondeur/largeur de la première structure en relief est choisi si grand que l'épaisseur effective d'une couche d'écartement générant un changement de couleur de la structure de couche d'interférence et de couche de film mince est réduite en raison de la première structure en relief dans la zone de la première structure en relief si fortement que la couche d'écartement ne remplit plus la condition λ/2 ou λ/4 pour la plage de la lumière visible.

**7.** Elément de sécurité selon l'une quelconque des revendications précédentes,
**caractérisé en ce**
**que** le rapport profondeur/largeur des éléments structurels individuels de la première structure en relief est choisi si grand qu'un second effet de décalage des couleurs est présent dans la première zone de l'élément de sécurité (31, 33, 35, 37), lequel se distingue du premier effet de décalage des couleurs généré dans la seconde zone de l'élément de sécurité par la structure de couche d'interférence et de couche de film mince.

**8.** Elément de sécurité selon l'une quelconque des revendications précédentes, **caractérisé en ce que** la profondeur de la première structure en relief (25, 26, 27) varie non seulement dans le sens x mais aussi dans le sens y, en ce que la distance moyenne entre des surélévations contiguës (254, 255, 256) de la première structure en relief (25, 26, 27) est inférieure à la profondeur de profilé moyenne (251) de la première structure en relief et en ce que des surélévations contiguës (254, 255, 256) de la première structure en relief sont éloignées de moins de 200 μm les unes des autres.

**9.** Elément de sécurité selon la revendication 8, **caractérisé en ce que** la première structure en relief (25, 26, 27) est une fonction périodique des coordonnées x et y qui varie périodiquement la profondeur de la première structure en relief non seulement dans le sens x mais aussi dans le sens y, et en ce que les longueurs de période (252, 253) de la fonction sont inférieures ou égales à la profondeur (251) de la première structure en relief (25, 26, 27).

**10.** Elément de sécurité selon la revendication 8, **caractérisé en ce que** la première structure en relief (25, 26, 27) est une grille croisée composée de deux grilles de base disposées essentiellement perpendiculairement l'une à l'autre, les longueurs de période des grilles de base étant inférieures ou égales à la profondeur de la première structure en relief (25, 26, 27).

**11.** Elément de sécurité selon l'une quelconque des revendications précédentes, **caractérisé en ce que** la distance moyenne entre des surélévations contiguës ou au moins l'une des longueurs de période est inférieure à 400 nm.

**12.** Elément de sécurité selon l'une quelconque des revendications précédentes, **caractérisé en ce que** la distance moyenne entre des surélévations contiguës (254, 255, 256) de la première structure en relief (25, 26, 27) est inférieure à la longueur d'onde limite de la lumière visible, de préférence inférieure à la moitié de la longueur d'onde limite de la lumière visible.

**13.** Elément de sécurité selon la revendication 1, **caractérisé en ce que** la seconde zone (32, 34, 36, 38) est une zone modèle (51) et la première zone (31, 33, 35, 37) est une zone de fond (52).

**14.** Elément de sécurité selon la revendication 13, **caractérisé en ce que** la seconde zone (32, 34, 36, 38) est une zone modèle (51) se présentant sous la forme d'un logo ou d'un texte.

**15.** Elément de sécurité selon l'une quelconque des revendications précédentes, **caractérisé en ce que** dans la seconde zone (36, 38) est moulée une seconde structure en relief (28, 29) dans la surface limite, un effet optique généré par la seconde structure en relief (28, 29) se superposant avec le premier effet de décalage des couleurs généré par la structure de couche d'interférence et de couche de film mince.

**16.** Elément de sécurité selon l'une quelconque des revendications précédentes, **caractérisé en ce que** la seconde structure en relief (28, 29) est une structure en relief avec un rapport profondeur/largeur des éléments structurels individuels de la structure en relief inférieur à 0,2.

**17.** Elément de sécurité selon la revendication 16, **caractérisé en ce que** la première et la seconde zone sont directement contiguës.

**18.** Elément de sécurité selon la revendication 16, **caractérisé en ce que**

**que** la période de grille de la seconde structure en relief (28, 29) est supérieure à la profondeur de la seconde structure en relief.

19. Elément de sécurité selon la revendication 16,
**caractérisé en ce**
**que** la seconde structure en relief (28, 29) est une structure agissant optiquement par diffraction, en particulier une structure en relief générant un hologramme.

20. Elément de sécurité selon la revendication 16,
**caractérisé en ce**
**que** la seconde structure en relief est une macrostructure.

21. Elément de sécurité selon la revendication 16,
**caractérisé en ce**
**que** la seconde structure en relief est une structure mate.

22. Elément de sécurité selon l'une quelconque des revendications précédentes,
**caractérisé en ce**
**que** la structure de couche d'interférence et de couche de film mince (23) est une structure de couche d'interférence et de couche de film mince de transmission.

23. Elément de sécurité selon l'une quelconque des revendications 1 à 21,
**caractérisé en ce**
**que** la structure de couche d'interférence et de couche de film mince est une structure de couche d'interférence et de couche de film mince réfléchissante.

24. Elément de sécurité selon l'une quelconque des revendications précédentes,
**caractérisé en ce**
**que** la structure de couche d'interférence et de couche de film mince est un système de couche de film mince se composant de plusieurs couches diélectriques.

25. Elément de sécurité selon l'une quelconque des revendications 1 à 23,
**caractérisé en ce**
**que** la structure de couche d'interférence et de couche de film mince est un système de couche de film mince se composant de plusieurs couches diélectriques et métalliques.

26. Elément de sécurité selon l'une quelconque des revendications 1 à 23,
**caractérisé en ce**
**que** la structure de couche d'interférence et de couche de film mince se compose d'une couche à reflet nacré.

27. Elément de sécurité selon l'une quelconque des revendications 24 à 26,
**caractérisé en ce**
**que** la structure de couche d'interférence et de couche de film mince présente une couche réfléchissante.

28. Elément de sécurité selon l'une quelconque des revendications précédentes,
**caractérisé en ce**
**qu'**une couche réfléchissante est disposée en partie entre la couche de vernis de réplication et la structure de couche d'interférence et de couche de film mince.

29. Elément de sécurité selon l'une quelconque des revendications précédentes,
**caractérisé en ce**
**que** le corps en pellicule multicouche (11) est une pellicule de transfert, en particulier une pellicule estampée à chaud.

30. Document de sécurité (2), en particulier billet de banque ou passeport qui présente un élément de sécurité (12) selon l'une quelconque des revendications précédentes.

31. Procédé de fabrication d'un document de sécurité (11, 12, 13) se présentant sous la forme d'un corps en pellicule multicouche, une première structure en relief (25, 26, 27) étant moulée dans une couche de vernis de réplication (22) du corps en pellicule multicouche dans une première zone de l'élément de sécurité (11, 12, 13) et une structure de couche d'interférence et de couche de film mince (23) étant appliquée sur la couche de vernis de réplication en outre dans une épaisseur nominale $t_0$, laquelle comporte au moins une couche d'écartement remplissant la condition $\lambda/4$ ou $\lambda/2$ pour la plage de la lumière visible et générant un premier effet de décalage des couleurs dépendant de l'angle de vue par interférence,

**caractérisé en ce**

**que** la première structure en relief (25, 26, 27) est moulée dans la première zone (31, 33, 35, 37) de l'élément de sécurité de manière à ce que l'épaisseur $t_0$ de la structure de couche d'interférence et de couche de film mince (23) soit réduite dans la zone de la première structure en relief (25, 26, 27) de manière à ce que le premier effet de décalage des couleurs de la structure de couche d'interférence et de couche de film mince (23) soit supprimé de sorte que dans la première zone (31, 33, 35, 37) de l'élément de sécurité, dans laquelle est moulée la première structure en relief (25, 26, 27), le premier effet de décalage des couleurs ne soit pas réalisé et dans une seconde zone (32, 34, 36, 38, 39) de l'élément de sécurité, dans laquelle la première structure en relief (25, 26, 27) n'est pas prévue, le premier effet de décalage des couleurs de la structure de couche d'interférence et de couche de film mince (23) soit réalisé.

**32.** Procédé selon la revendication 31,
**caractérisé en ce**
**que** la première structure en relief est moulée par réplication UV dans la couche de vernis de réplication.

**33.** Procédé selon la revendication 31,
**caractérisé en ce**
**que** la structure de couche d'interférence et de couche de film mince est appliquée par pulvérisation cathodique ou métallisation sous vide sur la couche de vernis de réplication.

**34.** Procédé selon la revendication 31,
**caractérisé en ce**
**qu'**une couche d'écartement de la structure de couche d'interférence et de couche de film mince est appliquée par pulvérisation cathodique ou métallisation sous vide dans la première et seconde zone dans la même densité de surface.

**35.** Procédé selon la revendication 31,
**caractérisé en ce**
**que** la première structure en relief (25, 26, 27) est moulée dans la première zone (31, 33, 35, 37) de l'élément de sécurité de telle manière que l'épaisseur $t_0$ de la structure de couche d'interférence et de couche de film mince (23) soit réduite dans la zone de la première structure en relief (25, 26, 27) de telle manière que le premier effet de décalage des couleurs généré par la structure de couche d'interférence et de couche de film de mince (23) soit modifié de sorte que dans la première zone (31, 33, 35, 37) de l'élément de sécurité, dans laquelle est moulée la première structure en relief (25, 26, 27), un second effet de décalage des couleurs soit généré par la structure de couche d'interférence et de couche de film mince d'épaisseur réduite.

**36.** Procédé selon la revendication 35,
**caractérisé en ce**
**que** le rapport profondeur/largeur des éléments structurels individuels de la première structure en relief est choisi si grand que le second effet de décalage des couleurs qui est présent dans la première zone de l'élément de sécurité (31, 33, 35, 37), se distingue du premier effet de décalage des couleurs qui est présent dans la seconde zone de l'élément de sécurité.

**37.** Procédé selon la revendication 36,
**caractérisé en ce**
**que** le rapport profondeur/largeur est supérieur à 0,5.

**38.** Procédé selon la revendication 35,
**caractérisé en ce**
**qu'**une seconde structure en relief se distinguant de la première structure en relief est formée dans une troisième zone (31, 33, 35, 37) de l'élément de sécurité, laquelle modifie le premier effet de décalage des couleurs généré par la structure de couche d'interférence et de couche de film mince (23) de sorte que dans la troisième zone (31, 33, 35, 37) de l'élément de sécurité, dans laquelle la seconde structure en relief (25, 26, 27) est prévue, soit généré un troisième effet de décalage des couleurs par la structure de couche d'interférence et de couche de film mince, lequel se distingue du premier et du deuxième effets de décalage des couleurs.

**39.** Procédé selon la revendication 35,
**caractérisé en ce**
**que** les rapports profondeur/largeur des éléments structurels individuels de la première et deuxième structures en relief sont choisis différents et respectivement si grands que le premier, deuxième et troisième effets de décalage des couleurs diffèrent.

**40.** Procédé selon la revendication 39,
**caractérisé en ce**
**que** les rapports profondeur/largeur de la première et deuxième structures en relief se distinguent du facteur 0,2 et sont choisis respectivement supérieurs à 0,5.

**Fig. 1**

**Fig. 2**

**Fig. 3**

**Fig. 4**

**Fig. 5a**

**Fig. 5b**

**Fig. 5c**

**Fig. 5d**

$t = 50\ nm$

$t = 100\ nm$

$t = 200\ nm$

$t = 300\ nm$

$t = 400\ nm$

$t = 420\ nm$

*Fig. 6*

Fig. 7

51  52

*Fig. 8a*

54  53

*Fig. 8b*

56  55

*Fig. 8c*

**Fig. 9**

**Fig. 10**

*Fig. 11a*

*Fig. 11b*

**IN DER BESCHREIBUNG AUFGEFÜHRTE DOKUMENTE**

**In der Beschreibung aufgeführte Patentdokumente**

- WO 0103945 A1
- WO 0200445 A1
- EP 0657297 A1
- WO 03033274 A1
- EP 1189079 A1

**In der Beschreibung aufgeführte Nicht-Patentliteratur**

- Optical document security. Artech House